# EUROPÄISCHE PATENTSCHRIFT

(11) **EP 3 912 021 B1**
(45) Veröffentlichungstag und Bekanntmachung des Hinweises auf die Patenterteilung: **24.05.2023**
(21) Anmeldenummer: 20819626.1
(22) Anmeldetag: 30.11.2020
(51) Int. Cl.: G06F 3/06

(54) **DYNAMISCHES HERSTELLEN EINER KOMPATIBILITÄT VON DATEISYSTEMEN IN ECHTZEIT**
DYNAMIC CREATION OF COMPATIBILITY BETWEEN FILE SYSTEMS IN REAL TIME
GÉNÉRATION DYNAMIQUE D'UNE COMPATIBILITÉ DES SYSTÈMES DE FICHIERS EN TEMPS RÉEL

(30) Priorität: 18.06.2020 EP 20020284
(43) Veröffentlichungstag der Anmeldung: 24.11.2021
(73) Patentinhaber: Paragon Software GmbH, 79098 Freiburg (DE)
(72) Erfinder: ZHDANOV, Ivan, Moskau 127543 (RU); ZUDIN, Aleksandr, 79104 Freiburg (DE); KOMAROV, Konstantin, 79102 Freiburg (DE)
(74) Vertreter: Reich, Jochen
(86) Internationale Anmeldenummer: PCT/EP2020/025548
(87) Internationale Veröffentlichungsnummer: WO 2021/170202

(56) Entgegenhaltungen:
- US-A- 5 463 772
- CHERNG-YING ING ET AL: "Heterogeneous file sharing by file-system emulation", COMPUTER SYSTEMS ARCHITECTURE CONFERENCE, 2008. ACSAC 2008. 13TH ASIA-PACIFIC, IEEE, PISCATAWAY, NJ, USA, 4. August 2008 (2008-08-04), Seiten 1-4, XP031321235, ISBN: 978-1-4244-2682-9

## Beschreibung

Die vorliegende Erfindung ist auf ein Verfahren zum dynamischen Herstellen einer Kompatibilität von Dateisystemen und zum Dateisystem unabhängigen Zugriff auf Daten in Echtzeit gerichtet. Erfindungsgemäß ist es möglich, dass ein Endbenutzer mit einem beliebigen Endgerät auf einen passiven Datenspeicher zugreift ohne dass es hierbei eine Berücksichtigung des zugrunde liegenden Dateisystems des passiven Speichers bedarf. Somit werden aufwändige Verfahrensschritte vermieden, welche beispielsweise eine Konvertierung des Dateisystems unmittelbar auf dem Speichermedium vorsehen. Somit ist das vorgeschlagene Verfahren effizienter und fehlerrobust. Die vorliegende Erfindung ist ebenfalls auf eine entsprechend eingerichtete Vorrichtung gerichtet sowie eine Systemanordnung. Darüber hinaus wird ein Computerprogrammprodukt mit Steuerbefehlen, welche die Verfahrensschritte implementieren, vorgeschlagen.

US 5,463,772 A1 zeigt Vorrichtungen zum Lesen und Schreiben auf einen Datenspeicher mit einem vorbestimmten Dateisystem durch einen Host-Computer über ein Transparent-Peripherie-Dateisystem-Adapter.

WO 2005/086 039 A2 schlägt ein Verfahren zur Herstellung mit strukturierten Informationen bespielter Speichermedien vor und schlägt hierzu eine Konvertierung von Daten durchzuführen vor und verwendet ein universelles Datenmodell.

WO 2018/031 794 A1 zeigt ein Verfahren zum Beschreiben von Speichermedien. US 5,742,818 A zeigt ein Verfahren zum Konvertieren eines Dateisystems.

Der Stand der Technik behandelt das Problem, dass falls ein Endgerät auf einen Datenspeicher zugreifen will es zu Kompatibilitätsproblemen kommen kann. Beispielsweise unterstützt das Endgerät ein auf dem Speicher vorhandenes Dateisystem nicht. Der Stand der Technik schlägt hierzu vor, dass bei einer Inkompatibilität, d.h. bei unterschiedlichen Dateisystemen, das Dateisystem des Datenspeichers typischerweise konvertiert wird. Somit wird also das Dateisystem des Datenspeichers in dasjenige Dateisystem, welches durch das Endgerät unterstützt ist, umgewandelt. Dies ist ein aufwendiger Prozess und darüber hinaus gehen die Daten auf dem Speichermedium verloren.

Das Überführen bzw. die Umwandlung von einem Dateisystem in ein anderes Dateisystem wird oftmals mittels einer Formatierung des gesamten Datenspeichers durchgeführt. Der Formatierung liegt zugrunde, dass der gesamte Datenspeicher während der Umstrukturierung gelöscht wird und sodann zu Beginn eines Schreibvorgangs leer ist. Dies bringt weitere Probleme mit sich, beispielsweise die Notwendigkeit der Datensicherung bzw. das Problem eines möglichen Datenverlusts.

Ferner ist aus dem Stand der Technik ein Emulieren bekannt, wobei eine Funktionalität eines Zielsystems nachgeahmt wird. Das Emulieren ist wiederum ein aufwendiger Prozess und erfordert einen erheblichen Aufwand bei der Bereitstellung einer Abstraktionsebene der zugrunde liegenden Hardware und Software des Zielsystems. Das Emulieren an sich ist oftmals aufwendig. Darüber hinaus werden unnötige Funktionalitäten bereitgestellt, falls es sich bei einem Kommunikationsteilnehmer um einen passiven Datenspeicher handelt. Dieser bietet typischerweise keine umfangreiche Funktionalität an, sondern die wesentliche Aufgabe des Datenspeichers ist es einfach passiv zu agieren und lediglich statische Daten abzuspeichern. Somit ist also auch ein Emulieren aufwendig und gegebenenfalls fehleranfällig.

Der Stand der Technik hat somit den Nachteil, dass kein Verfahren bereitgestellt wird, welches einem Endbenutzer erlaubt, einen passiven Datenträger an ein Endgerät derart anzuschließen, dass in jedem Falle eine Kompatibilität der zugrunde liegenden Dateisysteme gewährt ist. Entsprechende Verfahren sind aufwendig und typischerweise wird in einem vorbereitenden Verfahrensschritt ein aufwändiges Konvertieren des gesamten Dateisystems durchgeführt. Dies wird aber für den Benutzer als nachteilig empfunden, da er typischerweise in Echtzeit den Datenträger beschreiben will und somit kein Formatieren in Kauf nehmen will. Droht dem Benutzer dann noch einen Datenverlust so fehlt es an der Akzeptanz solcher Verfahren.

Es ist daher eine Aufgabe der vorgeschlagenen Erfindung ein Verfahren bereitzustellen, welches es dem Benutzer ermöglicht, einen passiven Datenspeicher an ein Endgerät anzuschließen, ohne dass es hierbei zu Problemen bezüglich der Kompatibilität von Dateisystemen kommt. Es soll also ein Dateisystem unabhängiger Datenzugriff möglich sein, der keinerlei Datenverlust mit sich führt und zudem in Echtzeit auszuführen ist. Es ist ferner eine Aufgabe der vorliegenden Erfindung eine entsprechend eingerichtete Vorrichtung vorzuschlagen sowie eine entsprechend eingerichtete Systemanordnung. Darüber hinaus soll ein Computerprogramm vorgeschlagen werden mit Steuerbefehlen, welche das Verfahren implementieren bzw. die Vorrichtung oder die Systemanordnung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zum dynamischen Herstellen einer Kompatibilität von Dateisystemen und zum Dateisystem unabhängigen Zugriff auf Daten in Echtzeit vorgeschlagen, aufweisend ein Gewähren eines Zugriffs auf das Dateisystem eines passiven Datenspeichers für ein aktives Endgerät und eine Modellierungsvorrichtung, welche dem passiven Datenspeicher und dem aktiven Endgerät kommunikativ zwischen geschaltet ist; ein Entgegennehmen einer Zugriffsanfrage von dem aktiven Endgerät durch die Modellierungsvorrichtung, wobei die Zugriffsanfrage Zugriffsdaten und Zugriffsoperationen auf den passiven Datenspeicher spezifiziert; ein Erkennen des Dateisystems des passiven Datenträgers durch die Modellierungsvorrichtung; ein Auswählen von abgespeicherten Zugriffsregeln, welche geeignet sind, die Zugriffsanfrage gemäß dem erkannten Dateisystem des passiven Datenspeichers durchzuführen; ein Anwenden der ausgewählten Zugriffsregeln auf Zugriffsdaten durch die Modellierungsvorrichtung, welche durch die Zugriffsanfrage spezifiziert werden, wobei die Zugriffsregeln die Zugriffsanfrage so wie diese von dem Dateisystem des aktiven Endgeräts generiert wurden mit dem Dateisystem des passiven Datenspeichers abbilden; und ein Durchführen der Zugriffsoperationen gemäß der Zugriffsanfrage.

Erfindungsgemäß erfolgt ein dynamisches Herstellen einer Kompatibilität von Dateisystemen derart, dass eben nicht die Hardware des Datenträgers emuliert wird, sondern vielmehr wird auf der Datenebene bzw. Dateiebene eine Anpassung derart vorgenommen, dass Daten von dem Endgerät auf den passiven Datenspeicher schreibbarer sind. Es erfolgt also kein Simulieren einer Hardware, sondern vielmehr wird auf Dateiebene gearbeitet, wozu ein Emulieren nicht notwendig ist. Auch hält ein passiver Datenspeicher keine Software vor, so dass auch hier keine Funktionalität abgebildet werden muss. Es werden von dem Datenspeicher typischerweise lediglich passive Leseoperationen bzw. Schreiboperationen angeboten. Hierdurch wird es möglich, dass das vorgeschlagene Verfahren in Echtzeit arbeitet.

Gemäß der vorliegenden Erfindung bedeutet Echtzeit, dass keine wesentlichen Latenzzeiten entstehen, dass also der Benutzer aus seiner Sicht keine Verzögerung bemerkt. Die einzelnen Verfahrensschritte können in einem Bruchteil einer Sekunde abgearbeitet werden, sodass der Endbenutzer das Ausführen des Verfahrens als Echtzeit empfindet. In technischer Sicht entsteht selbstverständlich eine Bearbeitungszeit, welche jedoch durch einen menschlichen Benutzer subjektiv nicht wahrnehmbar ist.

Durch das Verfahren wird erfindungsgemäß vermieden, dass in einem vorbereitenden Verfahrensschritt ein Emulieren bzw. ein Überführen von Dateisystemen durchgeführt werden muss. Somit kann der Endbenutzer das Speichermedium bzw. den passiven Datenspeicher mittels der Modellierungsvorrichtung an das Endgerät koppeln und sofort mit Leseoperationen und Schreiboperationen auf den Datenspeicher beginnen. Somit erfolgt ein Zugriff auf Daten des Datenspeichers unabhängig von dem Dateisystem. Der Zugriff auf Daten heißt hierbei das sowohl Leseoperationen als auch Schreiboperationen auf dem Datenträger unterstützt werden.

Hierzu ist ein Gewähren eines Zugriffs auf das Dateisystem notwendig. Ein Gewähren eines Zugriffs wird auch als ein MOUNT Vorgang bezeichnet. Hierbei ist es möglich, das Dateisystem des passiven Datenspeichers auszulesen und bereits zu erkennen, welche Daten auf dem Datenspeicher vorliegen. Dies erfordert keinen nennenswerten zeitlichen Aufwand, so dass aus Sicht des Benutzers auch dieser Verfahrensschritt in Echtzeit, d.h. ohne Wartezeiten, ausgeführt werden kann. Durch das Gewähren eines Zugriffes auf das Dateisystem wird der Datenspeicher mit dem aktiven Endgerät kommunikativ gekoppelt, wobei die Modellierungsvorrichtung zwischengeschaltet wird. Das Gewähren eines Zugriffs umfasst beispielsweise das Herstellen einer Steckverbindung zwischen dem Datenspeicher, der Modellierungsvorrichtung und dem aktiven Endgerät.

Die Steckverbindung kann derart erfolgen, dass der passive Datenspeicher direkt in die Modellierungsvorrichtung eingesteckt wird und diese wiederum in das aktive Endgerät. Es ist aber auch möglich je eine kabelgebundene Verbindung zwischen dem Datenspeicher, der Modellierungsvorrichtung und dem Endgerät bereitzustellen. Gemäß einem Aspekt der vorliegenden Erfindung erfolgt das Gewähren eines Zugriffs mittels einer physischen Verbindung zwischen Datenspeicher, Modellierungsvorrichtung und Endgerät. Der Fachmann kennt hierzu geläufige Formate bzw. wie eine derartige Steckverbindung auszugestalten ist. Als ein Beispiel kann USB gelten, so dass hierzu geläufige Schnittstellen Verwendung finden können. Bei einem passiven Datenspeicher kann es sich somit um eine externe Festplatte oder um einen USB Stick bzw. SD-Karte-Slot handeln.

Die Modellierungsvorrichtung kann als eine eigene Hardwareeinrichtung ausgestaltet sein und kann beispielsweise über einen Datenspeicher verfügen, der Zugriffsregeln beinhaltet. Die Modellierungsvorrichtung kann auch als ein eingebettetes System umgesetzt werden, welches die Steuerungslogik bereitstellt bzw. ausführt. Generell umfasst die Modellierungsvorrichtung mindestens zwei Schnittstellen, wobei der passive Datenspeicher über eine Schnittstelle mit der Modellierungsvorrichtung kommuniziert und das aktive Endgerät mit einer weiteren Schnittstelle. Generell ist es aber auch möglich, weitere Schnittstellen bereitzustellen, sodass auch mehrere Datenspeicher angeschlossen werden können. Auch ist es möglich mehrere aktive Endgeräte anzuschließen, so dass diese auf den Datenspeicher schreiben bzw. lesen.

Der passive Datenspeicher stellt keinerlei Funktionalität bereit, sondern dient lediglich dem Abspeichern von Daten und kann folglich als passiv bezeichnet werden. Die entsprechenden Schreiboperationen und Leseoperationen werden von dem aktiven Endgerät initiiert und übermittelt. Das aktive Endgerät initiiert also das erfindungsgemäße Verfahren und möchte auf den passiven Datenspeicher zugreifen. Das aktive Endgerät hält Daten bereit, welche gemäß dem zugrunde liegenden Dateisystem abgespeichert werden bzw. frägt Daten an, welche auf dem passiven Datenspeicher abgespeichert sind. Erfindungsgemäß werden in Abhängigkeit des unterstützen Dateisystems des aktiven Geräts die entsprechenden Daten angepasst.

Generell unterstützt das aktive Endgerät ein erstes Dateisystem, wobei der passive Datenspeicher über ein zweites Dateisystem verfügt. Werden nunmehr Daten auf den passiven Datenspeicher geschrieben, so werden die Daten im ersten Dateisystemformat derart angepasst, dass diese im zweiten Dateisystemformat abzuspeichern sind. Werden Daten von dem Datenspeicher angefragt, so werden die entsprechenden Daten von dem zweiten Dateisystemformat derart angepasst, dass sie dem ersten Dateisystemformat entsprechen. Typischerweise ist hierzu kein Anpassen der Nutzdaten erforderlich, sondern es müssen lediglich die Zusatzdaten angepasst werden. So können beispielsweise Metadaten derart modelliert werden, dass diese auf den Datenspeicher schreibbarer sind bzw. auf dem aktiven Endgerät abspeicherbar sind. Bei den Zusatzdaten kann es sich um Daten handeln, welche die Nutzdaten beschreiben bzw. Information bezüglich des Dateisystems bereitstellen. So kann es vorkommen, dass die Zusatzdaten einen Offset beschreiben, der angibt, wo die entsprechenden Datenblöcke physisch auf dem Speichermedium abgespeichert werden.

Somit erfolgt ein Entgegennehmen einer Zugriffsanfrage von dem aktiven Endgerät durch die Modellierungsvorrichtung, wobei die Zugriffsanfrage Zugriffsdaten und Zugriffsoperationen auf den passiven Datenspeicher spezifiziert. Bei den Zugriffsoperationen kann es sich entweder um Leseoperationen oder Schreiboperationen handeln, während die Zugriffsdaten beschreiben, was genau abgefragt bzw. übermittelt werden soll. Die Zugriffsdaten können beispielsweise einen Dateinamen spezifizieren, der gemäß der Zugriffsoperation "schreiben" auf den Datenspeicher geschrieben werden soll. Die Zugriffsanfrage wird von dem aktiven Endgerät initiiert und gibt die gewünschten Daten an, ohne dass hierbei auf das Dateisystem eingegangen wird.

Sodann erfolgt ein Erkennen des Dateisystems des passiven Datenträgers durch die Modellierungsvorrichtung. Die Modellierungsvorrichtung vermittelt zwischen dem aktiven Endgerät und dem passiven Datenspeicher. Somit werden alle Nachrichten bzw. Befehle durch die Modellierungsvorrichtung durchgereicht. Somit kommunizieren die angeschlossenen Kommunikationsteilnehmer, also das aktive Endgerät und der passive Datenspeicher, lediglich über die Modellierungsvorrichtung.

Ferner erfolgt ein Auswählen von abgespeicherten Zugriffsregeln, welche geeignet sind, die Zugriffsanfrage gemäß dem erkannten Dateisystem des passiven Datenspeichers durchzuführen. Die abgespeicherten Zugriffsregeln können beispielsweise empirisch ermittelt werden bzw. können in einem vorbereitenden Verfahrensschritt erstellt werden. Die Zugriffsregeln beschreiben wie Daten zu modellieren sind, dass sie ausgehend von einem ersten Dateisystem innerhalb eines zweiten Dateisystems interpretierbar sind. Typischerweise erfolgt hier ein Anpassen von Zusatzdaten, beispielsweise Metadaten, derart, dass Dateien bzw. Daten, welche gemäß dem ersten Betriebssystem codiert sind gemäß dem zweiten Betriebssystem codiert werden. Erfolgt beispielsweise eine Schreiboperation so übermittelt das aktive Endgerät die Dateien gemäß dem ersten Dateisystem bzw. Dateisystemformat, welches auf dem aktiven Endgerät vorhanden ist. Diese werden sodann gemäß der Zugriffsregeln derart modelliert, dass diese auf dem zweiten Dateisystem bzw. Dateisystemformat abgespeichert werden können. Erfolgt hingegen eine Leseroperation, so werden die Daten des zweiten Dateisystems derart modelliert, dass diese von dem aktiven mit interpretierbar sind. Somit werden die Daten derart umgewandelt, dass sie auf dem Dateisystem des aktiven Endgeräts abgespeichert werden können.

Die Zugriffsregeln können derart selektiert werden, dass eine Tabelle vorgehalten wird, welche in der ersten Spalte das Dateisystem des aktiven Endgeräts beschreibt, in der zweiten Spalte das Dateisystem des passiven Datenspeichers beschreibt und in einer dritten Spalte angibt, welche Zugriffsregeln vorgesehen sind. So kann die dritte Spalte einen Zeiger bereithalten, der auf die entsprechenden Zugriffsregeln verweist. Als Dateisystem können FAT, FAT32, ExFAT, NTFS oder andere verwendet werden.

Der Datenspeicher mit den Zugriffsregeln ist typischerweise innerhalb der Modellierungsvorrichtung verbaut bzw. ist es auch möglich, dass der Datenspeicher als ein externer Datenspeicher vorliegt, der ausgelesen wird. So kann der Datenspeicher auch von dem aktiven Endgerät vorgehalten werden.

Die Zugriffsregeln beschreiben also Regeln, wie die zu schreibenden bzw. zu lesenden Daten anzupassen sind, damit sie jeweils kompatibel sind. D.h. es kann vorgesehen sein, dass die Zugriffsdaten derart analysiert werden, dass Nutzdaten von sonstigen Daten getrennt werden und die sonstigen Daten gemäß dem Dateisystem angepasst werden. Optional ist es vorgesehen, dass die Nutzdaten ebenfalls angepasst werden, wobei in einem typischen Fall nur die zusätzlichen Daten, bzw. die Metadaten angepasst werden. Somit ist es möglich, den Modulationsvorgang sehr effizient auszuführen und es ist wiederum möglich das Verfahren in Echtzeit auszuführen. Das Umwandeln der zusätzlichen Daten kann deshalb schnell erfolgen, da nicht das Dateisystem angepasst wird sondern eben die Daten und bei den Daten typischerweise nur die Metadaten. Hierbei handelt es sich um lediglich sehr geringe Datenmengen, welche ohne großen technischen Aufwand angepasst werden können.

Sind die Zugriffsregeln ausgewählt, so werden diese auf die Zugriffsdaten angewendet, d.h. die zu lesenden bzw. zu schreibenden Daten werden derart angepasst, dass diese auf das Dateisystem des passiven Datenspeichers geschrieben werden können bzw. falls Daten gelesen werden, werden diese so angepasst, dass diese dem Dateisystem des aktiven Endgeräts entsprechen. Wie bereits beschrieben wurde, reicht es hierbei oftmals aus lediglich Zusatzdaten zu codieren bzw. zu modellieren und nicht Nutzdaten.

Da nunmehr die Daten kompatibel transformiert wurden ist es möglich den eigentlichen Schritt des Durchführens der Zugriffsoperationen zu veranlassen. Bei den Zugriffsoperationen kann es sich entweder um Leseoperationen oder Schreiboperationen handeln. Da nunmehr die Daten passend vorliegen werden diese also auf den passiven Datenspeicher geschrieben bzw. von dem passiven Datenspeicher gelesen.

Die Verfahrensschritte können derart iterativ ausgeführt werden, dass für einen definierten Datenstrom das Anwenden der ausgewählten Zugriffsregeln und das Durchführen der Zugriffsoperationen erfolgt. So doch kann beispielsweise durch das aktive Endgerät eine Menge von Dateien angefragt werden und es kann gemäß der Zugriffsoperationen bestimmt werden, ob ein einmaliges Anpassen der Zugriffsdaten ausreicht oder ob beispielsweise nach jeder Schreiboperation einer Datei ein erneutes Anwenden der Zugriffsregeln notwendig ist. Somit können also für jede Datei jeweils die Metadaten angepasst werden oder es werden die Metadaten nur einmal angepasst und alle Nutzdaten werden überschrieben. Wie hierbei vorzugehen ist kann in dem Datenspeicher der Modellierungsvorrichtung hinterlegt sein.

Gemäß einem Aspekt der vorliegenden Erfindung umfasst das Gewähren des Zugriffs einen Mount-Vorgang, ein Einbinden des passiven Datenträgers in die Modellierungsvorrichtung, ein Einbinden des passiven Datenträgers in das aktive Endgerät, ein kommunikatives Koppeln, ein Herstellen mindestens einer Steckverbindung, ein Aktivieren eines Zugriffs, ein Einrichten von Zugriffsrechten und/ oder eine Datenkommunikation. Dies hat den Vorteil, dass bereits bei dem Gewähren eines Zugriffs der Datenspeicher ausgelesen werden kann und somit ist es möglich bei einer Leseoperation die verfügbaren Daten bereits abzuschätzen. Somit sind beispielsweise Dateigrößen bekannt und es kann bestimmt werden wie der zu lesende Datenstrom aufgebaut ist. In Abhängigkeit dieser Information kann das Anwenden der ausgewählten Zugriffsregeln und das Durchführen der Zugriffsoperationen optimiert werden. Liegen beispielsweise viele kleinere Dateien vor, so können einzelne Gruppen von Dateien als ein Datenstrom gelesen werden und somit bezieht sich das Anwenden der ausgewählten Zugriffsregeln auf mehrere Dateien. Liegen große Dateien vor, so kann für jede Datei das Anwenden der Zugriffsregeln erfolgen. Das kommunikative Koppeln stellt sicher, dass das aktive Endgerät über die Modellierungsvorrichtung mit dem passiven Datenspeicher kommuniziert. Darüber hinaus ist es möglich weitere Sicherheitsmechanismen zu implementieren, beispielsweise können Zugriffsrechte vergeben werden.

Gemäß einem weiteren Aspekt der vorliegenden Erfindung weist das aktive Endgerät ein Betriebssystem auf, welches die Zugriffsanfrage generiert. Dies hat den Vorteil, dass die Datenströme bereits vorab spezifiziert werden können und somit ist bekannt, welche Dateien angefragt werden. So kann das Betriebssystem angeben, dass eine Vielzahl von Dateien gelesen bzw. geschrieben werden sollen und somit kann auch das Anwenden der ausgewählten Zugriffsregeln auf eine oder mehrere Dateien angewendet werden. Die Zugriffsdaten können folglich segmentiert werden und können am Stück angepasst werden oder einzelne Segmente, d.h. einzelne Datenströme, können angepasst werden. So können kleine Datenmengen zusammengefasst werden und es erfolgt ein einmaliges Anwenden der Zugriffsregeln. Somit können diese Dateien geschrieben werden und es müssen nicht jedes Mal erneut Zusatzdaten angepasst werden.

Gemäß einem weiteren Aspekt der vorliegenden Erfindung wird das Anwenden und Durchführen iterativ für jeden Datenstrom durchgeführt, wobei das Betriebssystem den Datenstrom definiert. Dies hat den Vorteil, dass das Anwenden der Zugriffsregeln und das Durchführen der Schreiboperationen beliebig oft durchgeführt werden kann, so dass nach der letzten Iteration alle Zugriffsdaten gelesen bzw. geschrieben sind. Somit können die Datenströme in Abhängigkeit der angefragten bzw. spezifizierten Dateien gewählt werden.

Gemäß einem weiteren Aspekt der vorliegenden Erfindung weist die Zugriffsanfrage mindestens eine Lese- und/ oder Schreibanfrage auf. Dies hat den Vorteil, dass auf den passiven Datenspeicher sowohl lesend als auch schreibend zugegriffen werden kann. Hierbei ist es nicht notwendig eine Funktionalität des passiven Datenspeichers zu emulieren, sondern vielmehr erfolgt erfindungsgemäß ein Anpassen der zu schreibenden bzw. zu lesenden (Meta-) Daten und es erfolgt eben kein unmittelbares Anpassen des Dateisystems auf dem passiven Datenspeicher.

Gemäß einem weiteren Aspekt der vorliegenden Erfindung spezifiziert die Zugriffsanfrage Nutzdaten und/ oder Zusatzdaten. Dies hat den Vorteil, dass die Zugriffsanfrage bereits spezifiziert, welche Daten Nutzdaten sind und welche Zusatzdaten sind. Zusatzdaten können beispielsweise als Metadaten vorliegen, die die Nutzdaten beschreiben. Solche Zusatzdaten sind, weise die Größe der Datei bzw. ein Dateiname. Unterstützt ein Dateisystem bestimmte Zusatzdaten nicht, beispielsweise wird ein anderer Zeichensatz verwendet, so erfolgt das Anwenden der Zugriffsregeln derart, dass der Dateiname so abgeändert wird, dass er mit dem Zeichensatz des Dateisystems übereinstimmt. Beispielsweise will das aktive Endgerät Dateien auf den passiven Datenspeicher schreiben und spezifiziert hierbei Nutzdaten mit Dateinamen mit Umlaut. Werden auf dem Dateisystem des Datenspeichers Umlaute nicht unterstützt, so sieht die Zugriffsregel beispielsweise vor, dass Umlaute durch einen anderen Vokal ersetzt werden bzw. durch einen Vokal und ein "e" ersetzt werden.

Gemäß einem weiteren Aspekt der vorliegenden Erfindung beschreiben Zugriffsdaten Dateinamen, absolute Speicheradressen, relative Speicheradressen, Dateitypen und/ oder Dateieigenschaften. Dies hat den Vorteil, dass die Zugriffsdaten beschreiben, welche Informationen potentiell angepasst werden müssen. Unterstützt das Speichersystem des passiven Datenspeichers nur bestimmte Speicheradressen bzw. verfügt nur über eine bestimmte Größe, so werden die übermittelten Speicheradressen angepasst, sodass die Zugriffsdaten auf dem Datenspeicher geschrieben werden können. Werden Dateien gelesen, so können diese Zugriffsdaten derart angepasst werden, dass sie auf dem Dateisystem des aktiven Endgeräts abgespeichert werden können.

Gemäß einem weiteren Aspekt der vorliegenden Erfindung beschreiben Zugriffsoperationen Lese- und/ oder Schreiboperationen. Dies hat den Vorteil, dass die Zugriffsoperationen beschreiben, wie die einzelnen Operationen durchgeführt werden sollen. Hierbei kann für jedes Dateisystem beschrieben werden, wie zu lesen bzw. zu schreiben ist.

Gemäß einem weiteren Aspekt der vorliegenden Erfindung beschreiben die Zugriffsregeln Modulationsoperationen, welche angeben wie Zusatzdaten von Zugriffsdaten zu modellieren sind, damit die Zugriffsdaten gemäß dem Dateisystem zu lesen und/ oder zu schreiben sind. Dies hat den Vorteil, dass die Zugriffsregeln Transformationsregeln bzw. Modulationsregeln aufzeigen, die bestimmte Zugriffsdaten transformieren, derart, dass diese falls sie bezüglich eines ersten Dateisystems kodiert sind derart umkodiert werden, dass sie kompatibel zu einem zweiten Dateisystem sind.

Gemäß einem weiteren Aspekt der vorliegenden Erfindung beschreiben Zugriffsregeln, wie Daten gemäß einem ersten Dateisystem in ein zweites Dateisystem zu schreiben und/ oder aus einem zweiten Dateisystem zu lesen sind. Dies hat den Vorteil, dass eine Transformation erfolgen kann, von einem Dateisystem, welches auf dem aktiven Endgerät vorliegen kann und einem Dateisystem, welches auf dem passiven Datenspeicher vorliegt. Somit beschreiben die Zugriffsregeln Kodierungsdaten bzw. beschreiben den Vorgang, wie Zusatzdaten anzupassen sind. Typischerweise müssen nur die Zusatzdaten angepasst werden und nicht zwingendermaßen die Nutzdaten.

Gemäß einem weiteren Aspekt der vorliegenden Erfindung umfasst der passive Datenspeicher ein Speichermedium, einen USB-Stick, eine Festplatte, eine Speicherkarte, einen Server, eine Netzwerkkomponente, einen DAS, einen NAS und/ oder einen lokalen Datenspeicher. Dies hat den Vorteil, dass herkömmliche Spezifikationen wieder verwendet werden können und zudem kann eine Vielzahl an Speichermedien Verwendung finden. Hierbei ist es auch möglich, dass mehrere passive Datenspeicher angesprochen werden. NAS steht für Network Attached Storage. DAS steht für Direct Attached Storage.

Gemäß einem weiteren Aspekt der vorliegenden Erfindung liegt das aktive Endgerät als ein Fernsehgerät, ein Drucker, ein Router, ein DAS, ein NAS, ein portables Endgerät, ein stationäres Endgerät, ein Rechner, ein Telefon oder eine Netzwerkkomponente vor. Dies hat den Vorteil, dass das aktive Endgerät auf eine Vielzahl von Arten implementiert werden kann und ein generisches Verfahren geschaffen wird, welches die Kompatibilität von ganz unterschiedlichen Dateisystemen herstellt.

Ein weiterer Aspekt der vorliegenden Erfindung ist deren Fähigkeit, Zugriffsanforderungen zu differenzieren und zu entscheiden, ob ein Zugriff auf Benutzerinhalte oder auf Metadaten angefordert wird. Je nach Art der Zugriffsanforderung wird die Anfrage dann entweder ohne Datenmodifikationen in den passiven Speicher weitergeleitet oder die Metadaten werden unter Anwendung der Übersetzungsregeln ins entsprechende Format gebracht.

Ein weiterer Aspekt der vorliegenden Erfindung ist deren Fähigkeit, nur einen Teil an Metadaten aus dem passiven Speicher abzurufen, um eine Rückmeldung an das Endgerät zu senden. So werden in Echtzeit und mit kurzer Antwortzeit nur die nötigsten Informationen zu den angeforderten Dateien bereitgestellt.

Ein weiterer Aspekt der vorliegenden Erfindung ist deren Fähigkeit, nur einen bestimmten Teil des passiven Speichers (in der Regel ein bestimmtes Unterverzeichnis mit seinen Inhalten) als separaten Speicher verfügbar zu machen, der dann vom Endgerät bereitgestellt werden kann.

Ein weiterer Aspekt der vorliegenden Erfindung ist deren Fähigkeit zur Vorauswahl und damit die Entscheidung zu treffen, welches Dateisystem dem Endgerät verfügbar gemacht wird. Das geschieht entweder über einen Switch oder über die Nutzung voreingestellter Dateien auf externen Medien, wie etwa makeas.exFAT, welche die Modellierungseinheit anweist, einen externen Speicher mit exFAT-Dateisystem zu erstellen. So kann die Modellierungseinheit das exFAT-Dateisystem für das Endgerät verfügbar machen, denn dieses Dateisystem ist weit verbreitet, seit seine Spezifikationen öffentlich zugänglich wurden (die Open-Source-Implementierung von exFAT wird von den Entwicklern der Microsoft Corporation unterstützt), und findet seinen Einsatz in einer ganzen Reihe von eingebetteten Geräten, Mobiltelefonen und anderen Multimedia-Geräten.

Ein weiterer Aspekt der vorliegenden Erfindung ist deren Fähigkeit, gravierende Nachteile von FAT32 auszugleichen, wenn dieses Dateisystem auf dem Endgerät verwendet wird. Ein großer Nachteil ist die Limitierung der Dateigröße, die bei FAT32 bei 4 GB liegt. Eine weitere Limitierung gibt FAT32 für die Anzahl an adressierbaren Dateien in demselben Unterverzeichnis vor, diese liegt bei 65534. Ein externes Medium, das mit FAT32 bereitgestellt wurde, wird höchstwahrscheinlich von älteren Modellen an Endgeräten unterstützt und auch deren Beschränkungen können berücksichtigt werden, damit der Nutzer/ die Nutzerin weiterhin damit arbeiten kann. Die vorliegende Erfindung geht mit dem Problem, das große Dateien darstellen, so um, dass sie für das Endgerät mehrere Dateien mit der erlaubten Maximalgröße von 4 GB verfügbar macht.

Die zweite Einschränkung von FAT32, nämlich die Höchstanzahl adressierbarer Dateien in demselben Unterverzeichnis 65534, hat dann Auswirkungen auf die Nutzung, wenn sich alle Dateien im selben Verzeichnis oder Unterverzeichnis befinden. Es ist zwar sehr unwahrscheinlich, dass eine Information aus einem Unterverzeichnis mit mehr als 65534 Dateien abgerufen wird, doch in so einem Fall wird die vorliegende Erfindung den Nutzer/ die Nutzerin darauf hinweisen, dass das Limit erreicht wurde und auf diese 65534 Dateien nicht gleichzeitig zugegriffen werden kann. So weiß der Nutzer/ die Nutzerin, dass nicht alle Dateien auf dem Endgerät angezeigt werden können, aber dennoch zur Verfügung stehen.

Es wird gemäß eines Aspekts der vorliegenden Erfindung angenommen, dass das Endgerät ausschließlich FAT32 unterstützt. Als Unterstützung für FAT32 im Endgerät gilt, wenn dessen Module oder Komponenten (z.B. installierte Dateisystemtreiber) fähig sind, lokale, externe oder virtuelle Speicher mit FAT32-Format zu adressieren, um Dateien und Verzeichnisse zu erstellen, wiederherzustellen, zu aktualisieren oder zu löschen.

Der Speicher wird gemäß eines Aspekts der vorliegenden Erfindung definiert als Blockgerät, d. h. grundlegende Vorgänge werden mittels Blöcken bereitgestellt - Lese- und Schreib-Blöcke, die offset oder über die Position im Speicher adressiert werden. Es wird angenommen, dass das Endgerät über eine USB-Schnittstelle für die Verbindung mit externen Speichermedien verfügt.

Die Annahme einer FAT32-Unterstützung im Endgerät dient generell nur Demonstrationszwecken und zielt nicht darauf ab, die Einsatzmöglichkeiten der vorgeschlagenen Erfindung auf das FAT32-System zu beschränken. Die Annahme, dass das Endgerät über eine USB-Schnittstelle für die Verbindung zu externen Speichermedien verfügt, dient gleichfalls der Veranschaulichung und zielt nicht darauf ab, die Einsatzmöglichkeiten der vorgeschlagenen Erfindung auf eine USB-Schnittstellenanbindung zu beschränken. Werden hier entsprechende Standards, wie zum Beispiel FAT oder FAT32 genannt, so steht dies allgemein für ein Dateisystem.

Die Aufgabe wird auch gelöst durch eine Modellierungsvorrichtung, welche einem passiven Datenspeicher und einem aktiven Endgerät kommunikativ zwischenschaltbar ist und eingerichtet zum Gewähren eines Zugriffs auf das Dateisystem eines passiven Datenspeichers für ein aktives Endgerät ist, wobei die Modellierungsvorrichtung ferner zum Entgegennehmen einer Zugriffsanfrage von dem aktiven Endgerät, wobei die Zugriffsanfrage Zugriffsdaten und Zugriffsoperationen auf den passiven Datenspeicher spezifiziert, eingerichtet ist, und ferner eingerichtet ist zum Erkennen des Dateisystems des passiven Datenträgers, und ferner eingerichtet ist zum Auswählen von abgespeicherten Zugriffsregeln, welche geeignet sind, die Zugriffsanfrage gemäß dem erkannten Dateisystem des passiven Datenspeichers durchzuführen, und die Modellierungsvorrichtung ferner eingerichtet ist zum Anwenden der ausgewählten Zugriffsregeln auf Zugriffsdaten, welche durch die Zugriffsanfrage spezifiziert werden; und ferner eingerichtet ist zum Veranlassen eines Durchführens der Zugriffsoperationen gemäß der Zugriffsanfrage. Die Modellierungsvorrichtung ist geeignet zur Verwendung in dem vorgeschlagenen Verfahren. Ferner kann die Modellierungsvorrichtung in der vorgeschlagenen Systemanordnung Einsatz finden.

Die Aufgabe wird auch gelöst durch Systemanordnung zur dynamischen Herstellung einer Kompatibilität von Dateisystemen und zum Dateisystem unabhängigen Zugriff auf Daten in Echtzeit, aufweisend mindestens eine Schnittstelleneinheit eingerichtet zum Gewähren eines Zugriffs auf das Dateisystem eines passiven Datenspeichers für ein aktives Endgerät und eine Modellierungsvorrichtung, welche dem passiven Datenspeicher und dem aktiven Endgerät kommunikativ zwischen geschaltet ist; die Modellierungsvorrichtung eingerichtet zum Entgegennehmen einer Zugriffsanfrage von dem aktiven Endgerät, wobei die Zugriffsanfrage Zugriffsdaten und Zugriffsoperationen auf den passiven Datenspeicher spezifiziert; die Modellierungsvorrichtung eingerichtet zum Erkennen des Dateisystems des passiven Datenträgers; eine Datenbankeinheit eingerichtet zum Auswählen von abgespeicherten Zugriffsregeln, welche geeignet sind, die Zugriffsanfrage gemäß dem erkannten Dateisystem des passiven Datenspeichers durchzuführen; die Modellierungseinrichtung eingerichtet zum Anwenden der ausgewählten Zugriffsregeln auf Zugriffsdaten durch die Modellierungsvorrichtung, welche durch die Zugriffsanfrage spezifiziert werden, wobei die Zugriffsregeln die Zugriffsanfrage so wie diese von dem Dateisystem des aktiven Endgeräts generiert wurden mit dem Dateisystem des passiven Datenspeichers abbilden; und den passiven Datenspeicher eingerichtet zum Durchführen der Zugriffsoperationen gemäß der Zugriffsanfrage.

Die Aufgabe wird auch gelöst durch ein Computerprogrammprodukt mit Steuerbefehlen, welche das Verfahren ausführen und die vorgeschlagene Anordnung betreiben, wenn sie auf einem Computer zur Ausführung gebracht werden.

Erfindungsgemäß ist es besonders vorteilhaft, dass das Verfahren zum Betreiben der vorgeschlagenen Vorrichtungen und Einheiten bzw. der Systemanordnung verwendet werden kann. Ferner eignen sich die vorgeschlagenen Vorrichtungen und Einrichtungen zur Ausführung des erfindungsgemäßen Verfahrens. Somit implementiert jeweils die Vorrichtung bzw. die Systemanordnung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zur Umsetzung der Funktion der strukturellen Merkmale bereit. Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Blockschaltbild einer bekannten Systemanordnung;
- Figur 2:: ein schematisches Blockschaltbild einer Systemanordnung zur dynamischen Herstellung einer Kompatibilität von Dateisystemen und zum Dateisystem unabhängigen Zugriff auf Daten in Echtzeit gemäß einem Aspekt der vorliegenden Erfindung;
- Figur 3:: ein schematisches Blockschaltbild einer Systemanordnung zur dynamischen Herstellung einer Kompatibilität von Dateisystemen und zum Dateisystem unabhängigen Zugriff auf Daten in Echtzeit gemäß einem weiteren Aspekt der vorliegenden Erfindung; und
- Figur 4:: ein schematisches Ablaufdiagramm eines Verfahrens zur dynamischen Herstellung einer Kompatibilität von Dateisystemen und zum Dateisystem unabhängigen Zugriff auf Daten in Echtzeit gemäß einem weiteren Aspekt der vorliegenden Erfindung;
- Figur 5:: ein schematisches Ablaufdiagramm von Verfahrensschritten, welche durch die Modellierungsvorrichtung durchgeführt werden können;
- Figur 6:: ein schematisches Ablaufdiagramm von erfindungsgemäßen Verfahrensschritten um eine Zugriffsanfrage zu bedienen;
- Figur 7:: ein schematisches Ablaufdiagramm von erfindungsgemäßen Verfahrensschritten der Modellierungsvorrichtung zum Lesen der Dateisystemparameter von dem passiven Speicher;

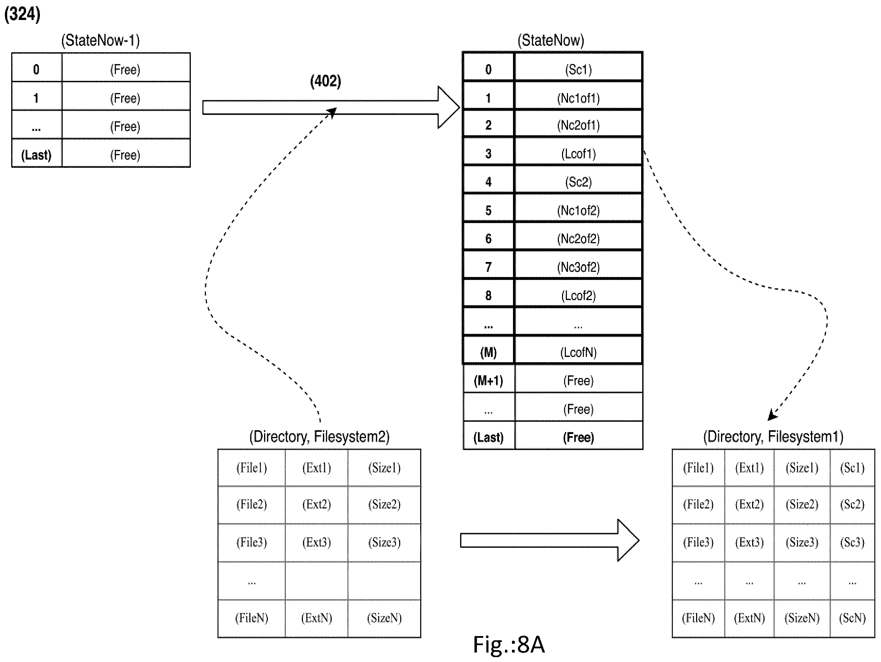

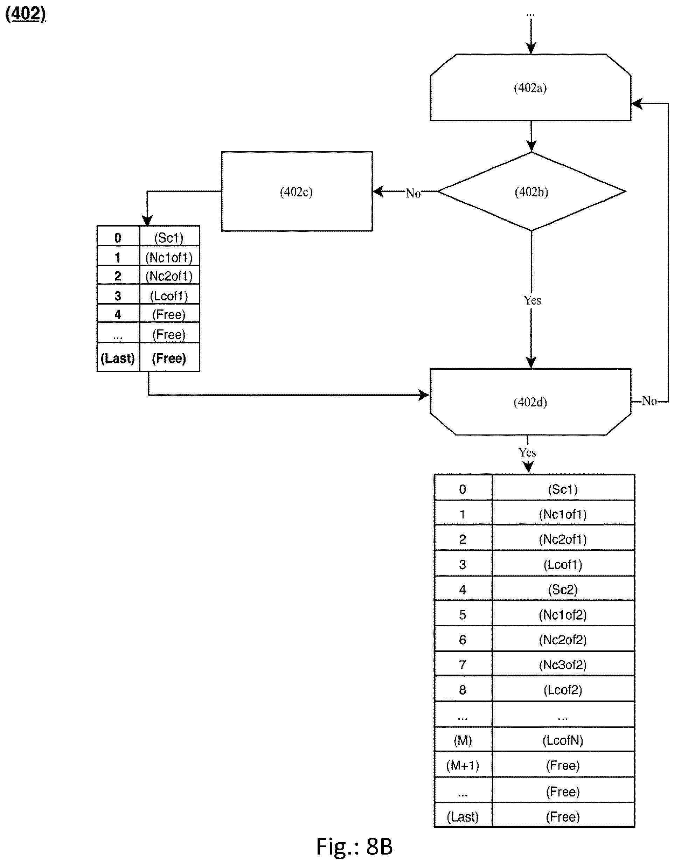

- Figuren 8A, 8B:: Tabellen zur Veranschaulichung der Verfahrensschritte zur Anwendung der abgespeicherten Zugriffsregeln gemäß eines Aspekts der vorliegenden Erfindung;
- Figuren 9A, 9B:: weitere Tabellen zur Veranschaulichung der Verfahrensschritte zur Anwendung der abgespeicherten Zugriffsregeln gemäß eines weiteren Aspekts der vorliegenden Erfindung; und
- Figur 10:: Tabellen zur Veranschaulichung der Verfahrensschritte zur Anwendung der abgespeicherten Zugriffsregeln gemäß eines Aspekts der vorliegenden Erfindung.

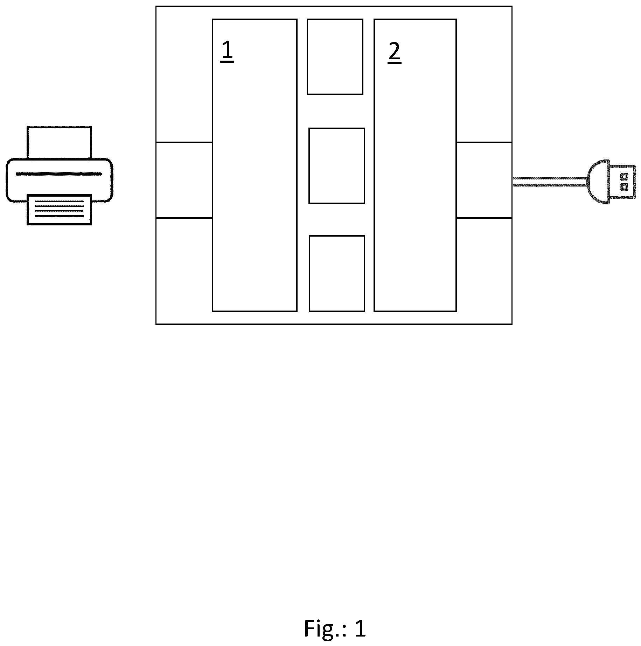

Figur 1 zeigt eine Systemanordnung gemäß dem Stand der Technik. Auf der linken Seite befindet sich ein Speichermedium und auf der rechten Seite befindet sich ein Endgerät, wobei vorliegend rechts nur die Steckverbindung eingezeichnet ist. Die

Modellierungsvorrichtung ist derart ausgestaltet, dass die Hardware sowohl auf der rechten Seite als auch auf der linken Seite emuliert wird. Dies ist im Stand der Technik deshalb der Fall, da sich die Vorrichtung in der Mitte dazu eignet Steuerbefehle an Peripheriegeräte weiterzugeben. Der Stand der Technik sieht hier also typischerweise kein passives Speichermedium vor, sondern vielmehr kann hier ein Peripheriegerät wie beispielsweise ein Eingabegerät angeschlossen werden. Somit fordert der Stand der Technik eben auch ein Emulieren von Funktionalität, was erfindungsgemäß nicht notwendig ist.

Wie aus der vorliegenden Figur 1 ersichtlich ist, ist es im Stand der Technik besonders nachteilig, dass sowohl ein Emulieren mittels des Emulators 1 auf der linken Seite und des Emulators 2 auf der rechten Seite notwendig ist. Der Stand der Technik sieht also vor, dass alle angeschlossenen Endgeräte emuliert werden müssen, was einen erheblichen technischen Aufwand darstellt und gegebenenfalls sogar fehleranfällig ist.

Erfindungsgemäß wird dieser Nachteil im Stand der Technik überwunden und es wurde überraschenderweise erkannt, dass lediglich auf Dateiebene bzw. Datenebene Anpassungen notwendig sind. Darüber hinaus leistet es der Stand der Technik nicht, dass das Herstellen der Kompatibilität in Echtzeit erfolgt. Liegt beispielsweise auf der linken Seite tatsächlich ein Speichermedium vor, so sieht es der Stand der Technik vor, dass hier das Dateisystem angepasst wird. Erfindungsgemäß wird eben nicht das Dateisystem angepasst, sondern lediglich die zu lesenden bzw. zu schreibenden Daten.

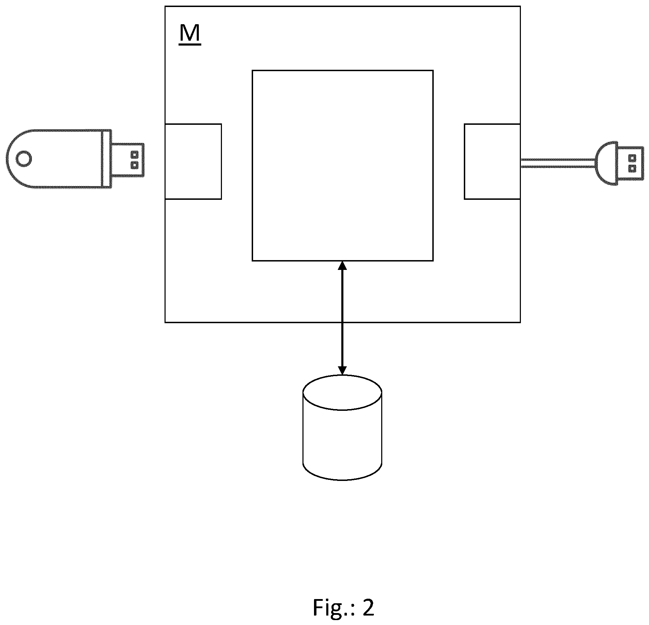

Figur 2 zeigt eine Systemanordnung gemäß der vorliegenden Erfindung. Auf der linken Seite ist das passive Speichermedium angeordnet und auf der rechten Seite ist das aktive Endgerät, welches vorliegend nicht eingezeichnet ist. In der Mitte befindet sich die Modellierungsvorrichtung M, welche kommunikativ zwischen das Speichermedium und das Endgerät geschaltet ist. Hierzu können sowohl auf der linken Seite als auch auf der rechten Seite Steckverbindungen vorgesehen sein oder es werden jeweils Kabel vorgesehen.

Ebenfalls zeigt die Figur 2 unten einen Datenspeicher, der die Zugriffsregeln abspeichert und der Modellierungsvorrichtung M vorhält. Der Datenspeicher kann extern angeordnet werden, wobei in einer bevorzugten Ausführungsform der Datenspeicher in der Modellierungsvorrichtung verbaut ist. Besonders vorteilhaft gegenüber dem Stand der Technik ist es, dass gemäß der vorgeschlagenen Erfindung keine Emulierungskomponenten 1, 2 vorzusehen sind, sondern vielmehr reicht es aus eine Modulationseinheit vorzusehen. Diese ist in der Modellierungsvorrichtung M mittig angeordnet.

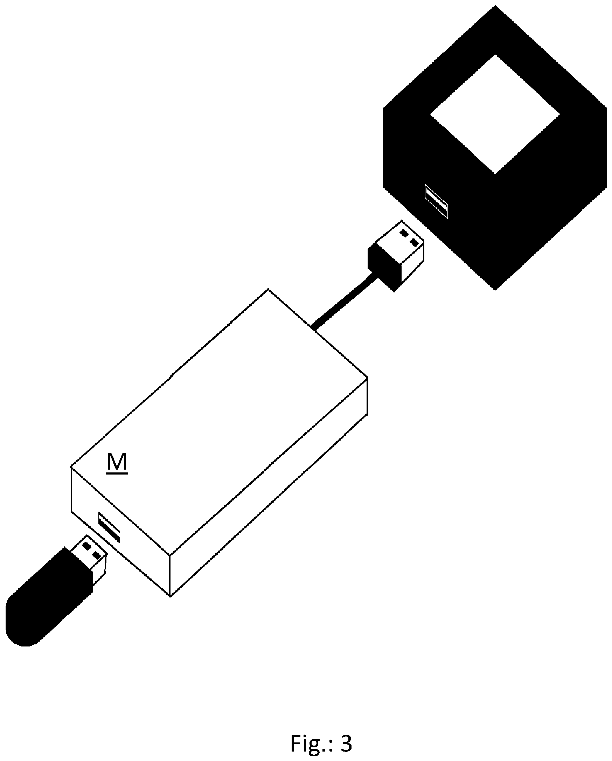

Figur 3 zeigt in einer weiteren Ansicht die vorgeschlagene Systemanordnung, wobei auf der linken Seite zum passiven Datenspeicher eine Steckverbindung vorgesehen ist und auf der rechten Seite eine Kabelverbindung. Dies kann auch anders gelöst werden und kann auch auf der linken Seite eine Kabelverbindung vorliegen. Die verwendeten Schnittstellen können gemäß herkömmlicher Spezifikationen ausgestaltet werden. In einer bevorzugten Ausführungsform sind die Schnittstellen als USB Schnittstellen implementiert.

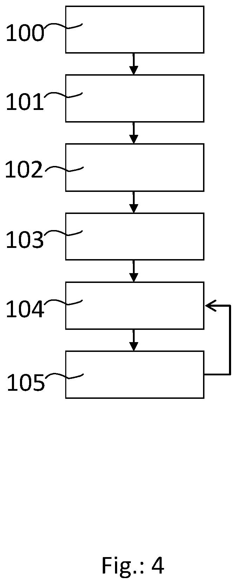

Figur 4 zeigt in einem schematischen Ablaufdiagramm ein Verfahren zum dynamischen Herstellen einer Kompatibilität von Dateisystemen und zum Dateisystem unabhängigen Zugriff auf Daten in Echtzeit, aufweisend ein Gewähren eines Zugriffs 100 auf das Dateisystem eines passiven Datenspeichers für ein aktives Endgerät und eine Modellierungsvorrichtung M, welche dem passiven Datenspeicher und dem aktiven Endgerät kommunikativ zwischen geschaltet ist; ein Entgegennehmen 101 einer Zugriffsanfrage von dem aktiven Endgerät durch die Modellierungsvorrichtung, wobei die Zugriffsanfrage Zugriffsdaten und Zugriffsoperationen auf den passiven Datenspeicher spezifiziert; ein Erkennen 102 des Dateisystems des passiven Datenträgers durch die Modellierungsvorrichtung; ein Auswählen 103 von abgespeicherten Zugriffsregeln, welche geeignet sind, die Zugriffsanfrage gemäß dem erkannten 102 Dateisystem des passiven Datenspeichers durchzuführen; ein Anwenden 104 der ausgewählten Zugriffsregeln auf Zugriffsdaten, welche durch die Zugriffsanfrage spezifiziert werden; und ein Durchführen 105 der Zugriffsoperationen gemäß der Zugriffsanfrage.

Der Fachmann erkennt hierbei, dass die Schritte weitere Unterschritte aufweisen können und insbesondere, dass die Verfahrensschritte jeweils iterativ und/ oder in anderer Reihenfolge ausgeführt werden können.

Alle folgenden Vorgänge sind aus Sicht des Endgeräts beschrieben, das vom Nutzer als Hauptakteur kontrolliert wird.

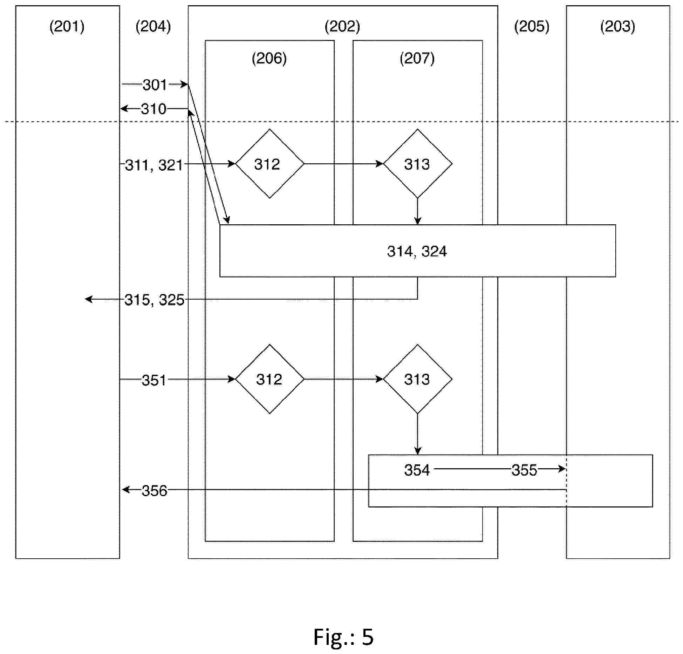

Figur 5 zeigt, welche Handlungen die Modellierungsvorrichtung 202 erfindungsgemäß vornehmen kann, wenn das Endgerät 201 Lesezugriffsanfragen generiert. Vorliegend unterstützt das Endgerät FAT32 als Dateisystem, welches fortan als Dateisystem1 bezeichnet wird.

Die Zugriffsanfragen erfolgen gemäß eines Aspekts der vorliegenden Erfindung mittels Kommunikationsschnittstelle zwischen dem Endgerät und der Modellierungsvorrichtung: Das ist die USB-Schnittstelle 204.

In der Modellierungsvorrichtung werden gemäß eines Aspekts der vorliegenden Erfindung zwei Verfahren realisiert. Das Verfahren zum Vorhalten der Zusatzdaten 206 und das Verfahren für die Modellierung von Daten 207. Werden die Daten vom passiven Speicher 203 gelesen, erfolgt dieser Vorgang mittels einer Kommunikationsschnittstelle 205. Es ist allerdings nicht zwingend, dass der passive Speicher auch per USB-Schnittstelle an die Modellierungsvorrichtung angeschlossen ist, die 205 kann auch durch einen Datenbus ersetzt werden, so dass der passive Speicher unmittelbar als Bauteil der Modellierungsvorrichtung realisiert ist.

Die Reihenfolge der Ereignisse richtet sich gemäß eines Aspekts der vorliegenden Erfindung danach, welche Zugriffsanfragen das Endgerät initiiert hat, nach dem die Modellierungsvorrichtung, mit der der passive Speicher schon verbunden ist, am Endgerät angeschossen wird. Diese Reihenfolge kann, je nach Ausführung des Endgeräts, ggf. von den folgenden Darstellungen abweichen.

Das Endgerät kommuniziert gemäß eines Aspekts der vorliegenden Erfindung mit der Modellierungsvorrichtung zweifach: Einerseits soll die Komponente des Betriebssystems des Endgeräts, die für USB-Geräte zuständig ist, die per USB angeschlossene Modellierungsvorrichtung als externes USB-Gerät mit dem Typ "Speicher" erkennen. Andererseits soll die andere Komponente des Betriebssystems bestimmen, wie das angeschlossene Speichergerät auf der logischen Ebene anzusprechen ist, konkret, welches Dateisystem auf dem Speicher zu erkennen ist.

Für die erste Kommunikation mittels USB-Protokoll ist es gemäß eines Aspekts der vorliegenden Erfindung mindestens notwendig, dass die Modellierungsvorrichtung wesentliche Parameter, z. Bsp. die Anzahl von adressierbaren Blöcken oder die Blockgröße, als notwendige Handlungen im Rahmen der USB-Protokoll-Unterstützung meldet. Dafür könnte eine sogenannte Kennungsanfrage 301 initiiert werden, die allerdings je nach Betriebssystemimplementierung nicht zwingend erfolgt. Konkrete Handlungen gemäß USB-Protokoll werden hier nicht behandelt, da dieses Protokoll im Wesentlichen problemlos durch einen Fachmann ausführbar ist. Es ist lediglich anzumerken, dass schon diese erste Kennungsanfrage dazu führt, dass die Modellierungsvorrichtung sich danach ausrichten kann und für die Bearbeitung solcher Kennungsanfrage notwendige Daten (die Anzahl von adressierbaren Blöcken) vorzuhalten sind.

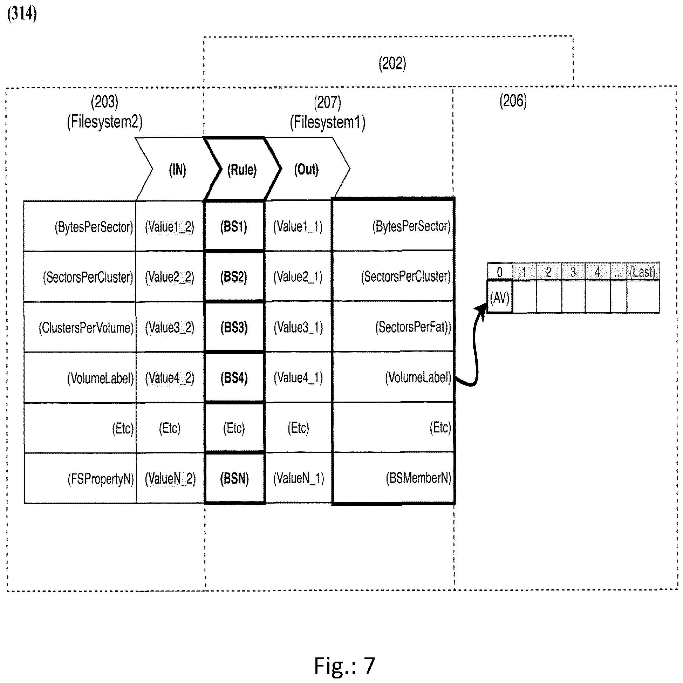

Die erste dafür gemäß eines Aspekts der vorliegenden Erfindung notwendige Handlung seitens der Modellierungsvorrichtung ist das Lesen der Dateisystemparameter vom passiven Speicher 314, was auf der Figur 7 detailliert bezeichnet ist. Das Dateisystem auf dem passiven Speicher, fortan als Dateisystem2 bezeichnet, wird durch die Modellierungsvorrichtung während der Ausführung von 314 erkannt, wobei ausgelesene Daten sich nicht darauf beschränken, die erste Kennungsanfrage zu befriedigen, sondern erfindungsgemäß zunächst derart umgewandelt werden, dass sie als Bootsektordaten des Dateisystems1 weiterhin in der Modellierungsvorrichtung vorgehalten werden 206. Mithin sind wesentliche Parameter für die Kennungsanfrage auch hinreichend bestimmt (die Anzahl von adressierbaren Blöcken, die Blockgröße), die Modellierungsvorrichtung erfüllt 310 die Kennungsanfrage gemäß USB-Protokoll.

Im weiteren Schritt soll das Betriebssystem des Endgeräts bestimmen, wie das angeschlossene Speichergerät auf logischer Ebene anzusprechen ist, konkret, welches Dateisystem auf dem Speicher zu erkennen ist.

Dazu kann das Endgerät wenigstens eine Zugriffsanfrage generieren, die darauf gerichtet ist, dass vom Speicher mindestens der Block 0 gelesen wird, denn dieser enthält die Informationen zur Bestimmung des Dateisystems.

Um diese Zugriffsanfrage zu bedienen, können erfindungsgemäß folgende Handlungen vorgenommen werden, die beispielhaft auf der Figur 5 gezeichnet sind.

Die erste Zugriffsanfrage 311 des Endgeräts lautet: einen Sektor lesen, angefangen von Position 0.

Im ersten Schritt 312 wird gemäß eines Aspekts der vorliegenden Erfindung geprüft, ob die angefragten Daten schon in der Modellierungsvorrichtung vorgehalten sind. Es ist nicht auszuschließen, dass die Kennungsanfrage des Endgeräts 301 noch nicht erfolgt ist, sondern durch die Zugriffsanfrage 311 ersetzt wird. Zwar wären die Parameter des passiven Speichers dem Endgerät beim Ausführen des 311 noch nicht bekannt, dies hindert aber das Endgerät nicht daran, die Zugriffsanfrage 311 zu generieren, denn von der Position 0 kann immer gelesen werden, wenn das Speichergerät ansprechbar ist. Für Darstellungszwecke wird unterstellt, dass die Kennungsanfrage gemäß 301 zuvor nicht erfolgt ist. Mithin sind die Daten für den ersten Sektor in Position 0 noch nicht gemäß 206 vorgehalten.

Im zweiten Schritt 313 wird gemäß eines Aspekts der vorliegenden Erfindung geprüft, um welche Daten im Sinne des Dateisystems1 es sich handelt, wenn von Position 0 ein Sektor gelesen wird. Die Handlung 313 ist also generell so zu beschreiben, dass beim Leservorgang zu prüfen ist, ob es sich um Zusatzdaten oder Nutzerdaten handelt, und wenn es sich um Nutzerdaten handelt, von welcher Datei im Sinne des Dateisystems1 sie stammen.

Dafür werden Zugriffsregeln angewandt. Wie oben gezeigt, definieren Zugriffsregeln, wie Metadaten eines Dateisystems in Metadaten eines anderen Dateisystems umzuwandeln sind. Diese Regeln definieren außerdem, welche Bereiche des Dateisystems, die für die Dateisystemstrukturen vorgesehen sind, den jeweiligen Bereichen auf dem anderen Dateisystem entsprechen, und erlauben damit zu bestimmen, ob es sich bei einer Zugriffsanfrage um Zusatzdaten im Sinne von Metadaten handelt.

Laut vorliegender Zugriffsregel 400 handelt es sich um spezielle Zusatzdaten, konkret, um einen sog. Bootsektor, wenn von der Position 0 ein Sektor gelesen wird.

Laut Zugriffsregeln wird ein Bootsektor für Dateisystem 1 derart sumiliert 314, dass alle Dateisystemparameter (Dateisystemgröße, die Größe für logische Blöcke auf dem Dateisystem (sog. Cluster), die Anfangsposition für das erste Verzeichnis usw.) schon hinreichend bestimmt sind. Das setzt voraus, dass schon zur Abwicklung des allerersten Zugriffs 311 diese Daten für das Endgerät vorzuhalten sind. Grundsätzlich alle Parameter für das Dateisystem1 werden von den jeweiligen Parametern des Dateisystems2 vom passiven Speicher abgeleitet bzw. errechnet. Die Zugriffsregel 401 umfasst dieses Verfahren, konkret bestimmt diese, wie die Parameter des Dateisystems1 abhängig von Dateisystem2 für die jeweilige Dateisystem 1-Dateisystem2-Kombination zu errechnen sind und welche konkrete Zugriffsregel zur Anwendung kommt. Auf der Figur ist bezeichnet, wie diese Zugriffsregel für den Bootsektor 401 angewandt wird. Solch eine Anwendung ist unproblematisch, denn die Dateisystemgröße ist bekannt und die Größe der logischen Blöcke kann vom Dateisystem2 übernommen werden (falls dies nicht möglich ist, greifen Zusatzzugriffsregeln für die Blockgrößenanpassung).

Somit hat die Modellierungsvorrichtung die Daten für den Sektor 0 derart simuliert und vorgehalten, dass das Endgerät anhand dieser weitere Zugriffsvorgänge anstoßen kann.

Die konkret vorliegende Anfrage 311 wird gemäß eines Aspekts der vorliegenden Erfindung dann erfüllt, wenn modellierte Bootsektordaten bereitgestellt werden.

Die Bereitstellung der angefragten Daten 315 erfolgt über die Kommunikationsschnittstelle (hier: USB). Die Zugriffsanfrage 311 ist somit vollendet.

Dass die erste Zugriffsanfrage zum Ergebnis führt, beim ausgelesenen Block 1 handele es sich um einen FAT32-Bootsektor, bestimmt weitere Handlungen des Endgeräts.

Grundsätzlich kann gemäß eines Aspekts der vorliegenden Erfindung davon ausgegangen werden, dass, wenn der erste Block als gültiger Bootsektor mit gültigem Inhalt (Dateisystemparameter) erkannt wird, das Betriebssystem des Endgeräts Zugriffsanfragen fortsetzt, um das Dateisystem auf dem mittels USB-Schnittstelle zur Verfügung gestellten Speicher zu bestimmen. Ein solcher Vorgang kann auch als "Probe" bezeichnet werden, deren Zweck es ist, den Speicher als ein spezifisches, logisch organisiertes Dateisystem zu erkennen und eine eigene logische Schnittstelle (den sog. "Mountpoint") innerhalb des Betriebssystems zu exponieren.

Alternativ, nachdem die erste Zugriffsanfrage erfüllt ist und der Inhalt des ersten Blockes sich als plausibler Bootsektor erweist, kann das Betriebssystem des Endgeräts auch eine Mitteilung (ein sog. "Broadcast") an seine Komponenten oder Applikationen machen, um diese über die Verfügbarkeit des neuen Speichergeräts zu informieren. Im Ergebnis können die zuständige Komponente und der Dateisystemtreiber einen weiteren Vorgang initiieren, der oft als "Mounten" bezeichnet wird.

Beide Alternativen führen zum selben Ergebnis, nämlich, dass der neue zur Verfügung gestellte Speicher als FAT32 erkannt wird und das Betriebssystem des Endgeräts oder wenigstens einer der Komponenten oder Apps diesen als logisches Dateisystem ansprechen können.

Ob dieses Dateisystem nur für Leservorgänge oder auch für Schreibvorgänge gemountet wird, hängt gemäß eines Aspekts der vorliegenden Erfindung von folgenden Faktoren ab: vom Betriebssystem des Endgeräts, vom Umfang der Unterstützung für das jeweilige Dateisystem und von der Aufgabe, die das Endgerät für extern anschließbare Speichermedien vorsieht. Die folgenden Ausführungen behandeln den Lese-Schreibe-Modus. Der Fall, dass das Dateisystem auf dem Speicher nur im Lesemodus gemountet wird, braucht nicht separat behandelt zu werden, denn das erfindungsgemäß vorgeschlagene Verfahren kann erst recht für den Lesemodus angewandt werden, wenn es im Lese-Schreibe-Modus zum versprochenen Erfolg führt.

Weitere Zugriffsanfragen vom Endgerät hängen also davon ab, welche Aufgaben im Falle des Ereignisses "Ein neuer Speicher ist verfügbar" vorgesehen sind. Es kann sein, dass das Endgerät eine bestimmte Anwendung ausführt, welche den Inhalt des neu bereitgestellten Speichers zu lesen versucht, was dazu führt, dass zunächst auf den Inhalt des Stammverzeichnisses zugegriffen wird. Wird keine Applikation automatisch gestartet, unternimmt der Nutzer, der die Modellvorrichtung am Gerät anschließt, weitere Handlungen, um den Inhalt des Speichers abzurufen und dabei beginnt er mit der Handlung "Abrufen der Inhalte des Stammverzeichnisses", um danach weitere eigene Schritte zu bestimmen. Um Inhalte des Stammverzeichnisses abzurufen, könnte der Nutzer auch Terminal-Befehle wie "dir" or "ls" eingeben. Allenfalls ist zu erwarten, dass mittels nächster Zugriffsanfrage vom Endgerät versucht wird, die Inhalte des Stammverzeichnisses zu lesen. Um diese Zugriffsanfrage zu bedienen, können erfindungsgemäß folgende Handlungen vorgenommen werden, die beispielhaft auch auf der Figur 5 dargestellt sind.

Es wird gemäß eines Aspekts der vorliegenden Erfindung unterstellt, dass der Stammverzeichnisbereich bei Sektor X anfängt, den Bereich von 100 Sektoren belegt und dies durch die auf Schritt 314 angewandte Regel bestimmt wurde. Dementsprechend wird die zweite Zugriffsanfrage 321 lauten: 100 Sektoren lesen, angefangen bei Sektor X.

Im ersten Schritt 312 wird gemäß eines Aspekts der vorliegenden Erfindung geprüft, ob die angefragten Daten schon vorgehalten sind. Vorliegend sind die Daten noch nicht vorgehalten, da das Endgerät bis jetzt nur den Sektor 0 abgelesen hat.

Im zweiten Schritt 313 wird geprüft, um welche Daten im Sinne des Dateisystems1 es sich handelt, wenn ab Position X 100 Sektoren gelesen werden. Dafür werden Zugriffsregeln angewandt.

Laut Zugriffsregel 400 handelt es sich um das sog. Stammverzeichnis, wenn für das modellierte Dateisystem auf den Sektor X zugegriffen wird, und zwar über die gesamte angefragte Länge (100 Sektoren).

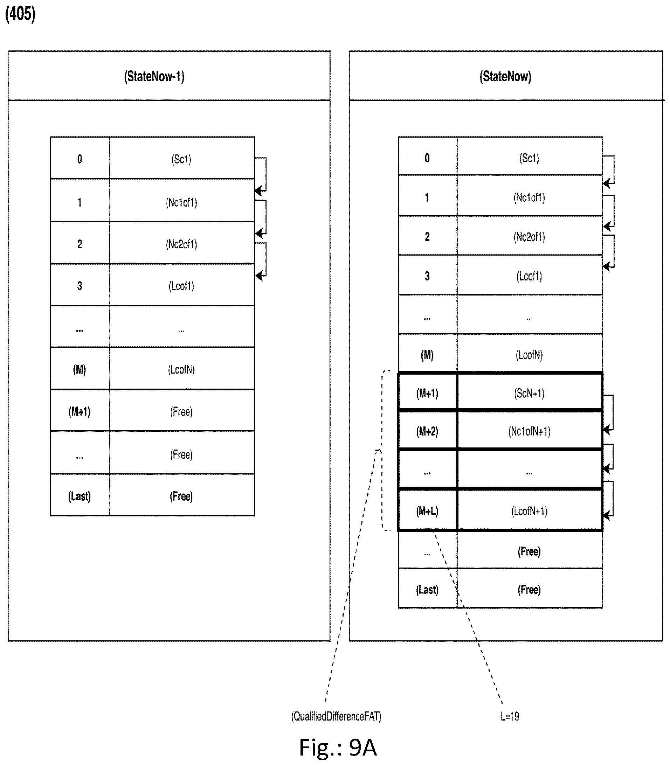

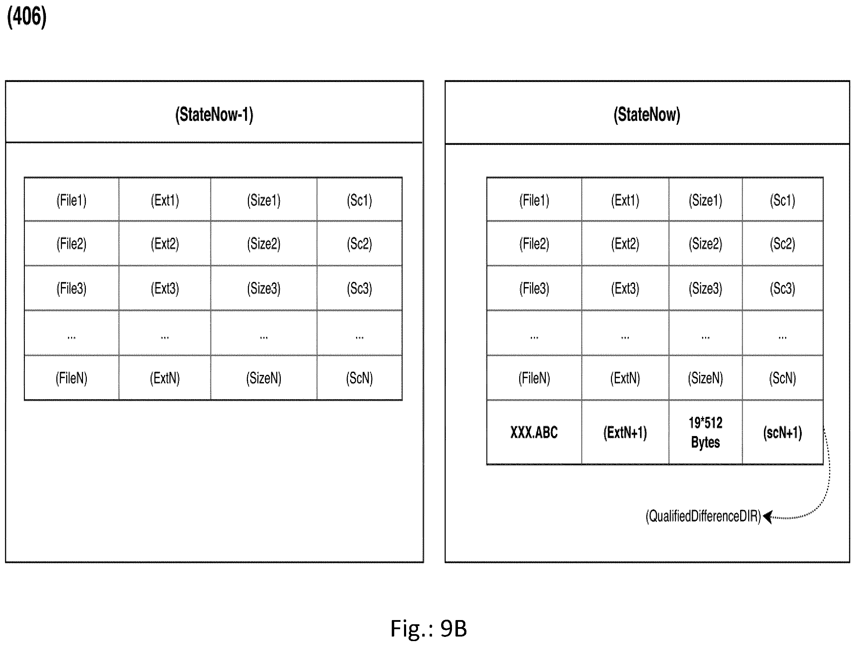

Damit die Modellierungsvorrichtung 202 die Daten für das Stammverzeichnis des Endgeräts vorhalten 206 kann, werden im folgenden Schritt 324 (siehe Figur 9) weitere Zugriffsregeln derart angewandt, dass für die auf dem Dateisystem2 vorhandenen Dateien im Stammverzeichnis dieses Systems Metadaten in Echtzeit generiert werden, welche dem Stammverzeichnisdatenformat des Dateisystems1 entsprechen.

Diese Metadaten sind also geeignet, die Dateien auf dem Dateisystem2 so zu umschreiben, dass jede Komponente des Endgeräts, die Dateisystem1 unterstützt (hier: FAT32), sie so interpretiert, als ob diese umschriebenen Dateien in der Modellierungsvorrichtung vorgehalten wären. Diese Metadaten werden erfindungsgemäß für jetzige und zukünftige Zugriffsanfragen des Endgeräts vorgehalten 206.

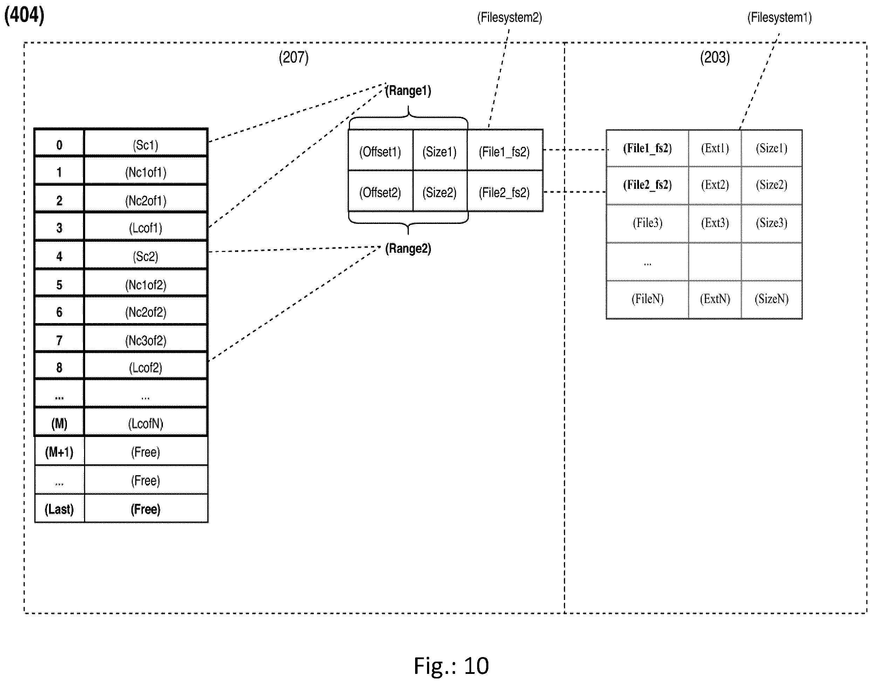

Für die Anwendung der Zugriffsregel 324 kann es dabei notwendig sein, weitere Metadaten aus dem Dateisystem2 auszulesen, um vollkommene Kenntnis darüber zu gewinnen, welche Dateien der Stammverzeichnisstruktur durch die angefragten 100 Sektoren adressierbar sind und welche Größe sie haben, und darüber hinaus durch das Verfahren 404 (s. Figur 10) zu bestimmen, in welchen Bereichen des Dateisystems2 oben genannte Dateien platziert sind.

Im Zwischenergebnis: Durch die Modellierung des Stammverzeichnisses im dem Dateisystem1 entsprechenden Format werden eventuell mehr Daten als angefragt ausgelesen, was unschädlich ist, denn solche zunächst überflüssig ausgelesene Daten werden für weitere Anwendungen der Zugriffsregel vorgehalten.

Die konkret vorliegende Lesezugriffsanfrage vom Endgerät aus Schritt 321 wird durch das Bereitstellen von mittels Anwendung der Zugriffsregel modellierten 100 Sektoren erfüllt.

Die Bereitstellung 325 der angefragten Daten erfolgt über eine Kommunikationsschnittstelle (hier: USB). Die Zugriffsanfrage 321 ist somit vollendet.

Nachdem die Stammverzeichnisinhalte für das Endgerät bereitgestellt wurden, kann dessen Anwendung den Nutzer auffordern, weitere Schritte zu unternehmen, etwa

Dateien zu öffnen oder Dateiinhalte für spezifische Vorgänge auszuwählen (drucken, Wiedergabe von Video-/Audiodateien etc.). An dieser Stelle sollte der Zugriff auf den Dateiinhalt vom externen Speichermedium erfolgen und die

Betriebssystemkomponente des Endgeräts (oder dessen Dateisystemtreiber)

Anfragen an das gemountete logische Volume generieren, um den erforderlichen Inhalt aus der Datei abzurufen.

Es wird gemäß eines Aspekts der vorliegenden Erfindung unterstellt, dass auf den Inhalt der Datei ABC.ZYZ zugegriffen wird, und es wird unterstellt, dass die Dateigröße 10 Blöcke beträgt.

Um diese Zugriffsanfrage zu bedienen, können erfindungsgemäß folgende Handlungen vorgenommen werden, die beispielhaft auch auf der Figur 5 dargestellt sind.

Es wird eine Zugriffsanfrage 351 initiiert, die darin besteht, 10 Blöcke von der Position Pos1, die dem dem ersten Cluster der Datei ABC.ZYZ SC1 auf dem Dateisystem 1 entsprechen, zu lesen.

Diese Daten waren noch nicht angefragt, daher sind sie noch nicht vorgehalten 206.

Zunächst ist zu bestimmen, ob es sich bei dieser Anfrage um Nutzerdaten oder Zusatzdaten handelt 313.

Dass es sich bei dieser Anfrage um Nutzerdaten handelt, ergibt sich schon daraus, dass beim Modellieren der FAT-Strukturen 402 zur Erfüllung der Anfrage 321 der Größe der Datei ABC.XYZ Rechnung getragen worden ist und für ihre Inhalte eine ununterbrochene modellierte Kette in der File-Allocation Table vorgehalten wird.

D.h., das Modellierungsverfahren 402 ist geeignet, vorhandene Dateien des Dateisystems2 auf dem modellierten Dateisystem1 so zu platzieren, dass sie nicht fragmentiert sind, und zwar unabhängig davon, ob diese Dateien auf dem Dateisystem2 aus mehreren geteilten Inhaltsfragmenten entstehen.

Mithin handelt es sich um Nutzerdaten, die mittels der Zugriffsanfrage 351 Daten ausgelesen wurden.

Im weiteren Schritt 354 ist gemäß eines Aspekts der vorliegenden Erfindung zu prüfen, auf welche Nutzerdaten konkret zugegriffen wird. Es ist nicht auszuschließen, dass das Endgerät die Zugriffsanfrage in Bezug auf mehrere Dateien, nicht nur für ABC.XYZ stellt. Dies wird durch das Verfahren 404 bestimmt (s. Figur 10), welches ermittelt, um welche Dateien auf dem Dateisystem2 es sich konkret handelt, wenn auf bestimmte Blöcke im Sinne des Dateisystems1 zugegriffen wird. Dieses Verfahren 404 ist also geeignet, weitere Handlungen zu bestimmen, die in spezifischen Kontexten für zugegriffene Inhalte von verschiedenen Dateien unternommen werden sollen. Ein solcher Kontext stellt fest, dass beim Lesen bestimmter Blöcke vom Dateisystem1, die Nutzerdaten entsprechen, immer entsprechende auszulesende Blöcke auf dem Dateisystem2 bestimmt sind. Im Ergebnis werden Nutzerdaten durch eine entsprechende, auf den passiven Speicher gerichtete Zugriffsanfrage 355 ausgelesen. Der Vorgang 355 wird solange wiederholt, bis alle im Wege der Anfrage 351 angefragten Daten ausgelesen wurden, wenn angefragte Inhalte auf dem Dateisystem2 nicht als ununterbrochene Kette platziert sind.

Die Bereitstellung 356 der angefragten Daten erfolgt über eine Kommunikationsschnittstelle (hier: USB). Die Zugriffsanfrage 351 ist somit vollendet.

Nachdem die Stammverzeichnisinhalte für das Endgerät bereitgestellt wurden, kann dessen Anwendung den Nutzer auffordern, weitere Schritte zu unternehmen, etwa Daten, die auf dem Endgerät generiert wurden, auf dem gemounteten logischen Volume zu speichern. Werden beispielsweise neue Dokument eingescannt, kann das gemountete logische Volume als Zielspeicherort gewählt werden.

Es wird unterstellt, dass das Endgerät versucht, nachdem auf dem Endgerät Nutzerdaten mit einem Umfang von 19 Blöcken generiert wurden, diese Nutzerdaten als Datei mit Namen XXX.ABC im Stammverzeichnis auf dem Dateisystem1 zu erstellen und dabei den Inhalt der neu erstellten Dateien XXX.ABC, beginnend mit Position Pos2, zu schreiben.

Es wird weiter gemäß eines Aspekts der vorliegenden Erfindung unterstellt, dass das Endgerät keine Zugriffsanfrage erstellt, die darauf abzielt, Dateinamen und Dateigröße im Stammverzeichnis des Dateisystems1 für die neue Datei zu beschreiben, wenn noch keine Nutzerdaten definiert sind, und eine solche Anfrage erst dann erfolgt, wenn alle Nutzerdaten für diese neu erstellten Daten beschrieben sind.

Der Grund für diese Annahme ist die Möglichkeit, dass auf dem Endgerät ein Verfahren zur Optimierung von Lese- und Schreibzugriffsanfragen implementiert ist.

Wird also unterstellt, dass das Endgerät versucht, Nutzerdaten zu schreiben, bevor die Metadaten für die jeweilige Datei durch eine andere Zugriffsanfrage beschrieben werden, entsteht eine Ungewissheit im Sinne des Verfahrens 404, die darin liegt, dass neu zu beschreibende Blöcke noch keiner Datei zuordenbar sind. Dieser schwebende Zustand wird aber spätestens dadurch beendet, dass das Endgerät noch eine Zugriffsanfrage generiert, die darauf gerichtet ist, die Metadaten für die neu erstellten Dateien auf dem Speicher zu aktualisieren.

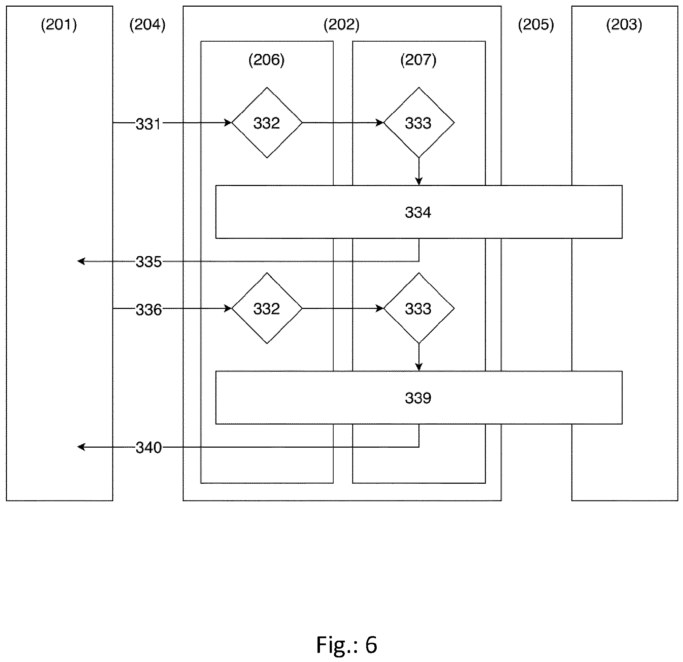

Um diese Zugriffsanfrage zu bedienen, können erfindungsgemäß folgende Handlungen vorgenommen werden, die beispielhaft auch auf der Figur 6 dargestellt sind.

Es wird eine Zugriffsanfrage 331 initiiert, die darin besteht, 19 Blöcke, beginnend mit Position Pos2, die dem SCN+1 entsprechen, zu schreiben.

Zunächst ist zu prüfen 332, ob diese zu schreibende Daten vorgehalten sind 206. Da die Daten im Position Pos2 weder gelesen noch geschrieben wurden, sind sie auch noch nicht vorgehalten.

Im nächsten Schritt ist zu bestimmen, ob es sich bei dieser Anfrage um Nutzerdaten oder Zusatzdaten handelt 333. Die Handlung 333 ist also generell so zu beschreiben, dass beim Schreibvorgang zu prüfen ist, ob es sich um Zusatzdaten oder um Nutzerdaten handelt, und wenn es sich um Nutzerdaten handelt, von welcher Datei im Sinne des Dateisystems1 sie stammen.

Das kann noch nicht eindeutig bestimmt werden, denn diese Blöcke sind weder als Metadaten vorgehalten 206 noch wurden sie als Nutzerdaten im Sinne des 351 gelesen. Im nächsten Schritt 334 wird gemäß Verfahrens 405 (siehe Figur 9) zunächst vermutet, es handele sich um Nutzerdaten und die zu schreibenden Blöcke werden entsprechend behandelt. Damit beginnt ein sogenannter Schwebezustand, weil die Blöcke noch keiner Datei zuordenbar sind. Die Modellierungsvorrichtung wird die zu schreibenden Daten bis auf Weiteres als Nutzerdaten vorhalten 206, über die Kommunikationsschnittstelle 204 wird aber über die Erfüllung des Schreibvorgangs berichtet 335. Die Zugriffsanfrage 331 ist somit vollendet.

Es ist davon auszugehen, dass beim Aktualisieren der Stammverzeichnisinhalte für Dateisystem1 eine weitere Zugriffsanfrage 336 initiiert wird, die darauf gerichtet ist, einen Block, beginnend mit der Position X+99 zu schreiben. Konkret handelt es sich um den letzten Sektor des Stammverzeichnisses.

Zunächst ist zu prüfen 332, ob diese zu schreibenden Daten vorgehalten sind 206. Das ist vorliegend der Fall, denn der Block in der Position X+99 wurde schon im Schritt 321 als Stammverzeichnis für das Dateisystem1 modelliert 324 und vorgehalten 206.

Wird ein Datenblock schon vorgehalten und handelt es sich dabei um Metadaten, kann durch die Anwendung von Zugriffsregeln bestimmt werden 339, um welche konkreten Änderungen es sich handelt. In Figur 9 wird ein entsprechendes Verfahren dargestellt 406, welches darin besteht, Änderungen in der Stammverzeichnisstruktur zu qualifizieren und als abstrakte Beschreibung zu definieren, woraus geschlossen werden kann, welche entsprechende Änderungen auf dem Dateisystem2 vorzunehmen sind. Vorliegend handelt es sich um einen neuen Eintrag für die Datei XXX.ABC, welche im Stammverzeichnis zuvor nicht existierte. Diese Änderung ist also so zu beschreiben, als wolle das Endgerät eine neue Datei namens XXX.ABC mit Größe 19 Sektoren, beginnend mit Pos2 erstellen. Solch eine abstrakte Beschreibung der Handlung kann auch dem Posix-Standard ähneln.

Im weiteren Schritt ist gemäß eines Aspekts der vorliegenden Erfindung die gezielte Änderung auf das Dateisystem2 anzuwenden, indem die abstrakte Beschreibung in eine entsprechende Anfrage an den passiven Speicher umzuwandeln ist. Im Ergebnis wird auf dem Dateisystem2 ein Eintrag für die Daten XXX.ABC erstellt, der allerdings noch keine Startposition dieser Datei auf dem Dateisystem2 konkretisiert, obwohl die Startposition auf Dateisystem1 schon vorgegeben ist. Daraus folgt, dass im schwebenden Zustand weiterhin eine Ungewissheit im Sinne des 404 besteht im Hinblick auf die Zuordenbarkeit von Nutzerdaten der konkreten Dateien auf Dateisystem1. Diese Ungewissheit wird aber mit einer Zugriffsanfrage, die darauf gerichtet ist, den Bereich mit FAT zu aktualisieren, behoben - darauf ist später noch einzugehen.

Schließlich wird über eine Kommunikationsschnittstelle 204 über die Erfüllung des Schreibvorgangs berichtet 340. Die Zugriffsanfrage 336 ist somit vollendet.

Nachdem das Endgerät oder dessen Anwendung alle notwendigen Nutzeraufgaben, wie das Scannen von Dokumenten und die Platzierung dieser Daten auf dem externen Medium oder den Transport anderer nutzergenerierter Inhalte, erledigt hat, kann das externe Medium vom Endgerät getrennt werden.

Einige Endgeräte fordern den Nutzer explizit dazu auf, das externe Gerät auszuhängen (unmounten), um die Datensicherheit für diese Vorgänge gewährleisten zu können. Der Nutzer wäre dann allein für einen möglichen Datenverlust verantwortlich, wenn er das externe Medium entfernte, bevor vom Endgerät die Aufforderung zur Ausführung des Unmount-Prozesses erfolgt, dessen Vollendung abgewartet worden und erst dann die Trennung von externem Medium und Endgerät erfolgt wäre. Eine solch sichere Methode zur Entfernung eines externen Speichers lässt sich nicht leicht als Standard durchsetzen, weil Nutzer zu Ungeduld neigen, wenn es um die Trennung eines externen Mediums vom Endgerät geht. Er erwartet nicht, einen Unmount-Prozess durchführen und abwarten zu müssen, sondern er möchte das externe Speichermedium einfach abziehen können, sobald die Geräteaktivitäten abgeschlossen sind und sich das Gerät im Ruhezustand befindet, was leicht auf dem Endgerät abzulesen ist. Um diesen Erwartungen des Nutzers gerecht zu werden, unterstützt das Betriebssystem des Endgeräts in der Regel eine Synchronisierungstechnik für den Dateisystemtreiber, damit dieser mit dem externen Speichermedium arbeiten kann.

Diese Technik hält das externe Speichermedium immer auf dem neusten Stand, indem sie die Inhalte der Dateisystemdaten, die im Arbeitsspeicher des Endgeräts vorgehalten werden, leert - dieses wird meist vom Betriebssystem selbst veranlasst. Das bedeutet folgendes: Nachdem das Endgerät oder dessen Anwendung seine Aufgaben, in die externe Speichermedien involviert sein können, erfüllt hat und in den Ruhezustand übergegangen ist (und auf weiteren Input oder weitere Anweisungen seitens des Nutzers wartet), kann der Dateisystemtreiber oder eine ähnliche Komponente noch nicht auf des externe Medium geschriebene Blöcke leeren -damit wird die Datensicherheit gewährleistet, sollte das externe Speichermedium plötzlich abgetrennt werden. Eine solche Synchronisierungstechnik führt zu weiteren Zugriffsanfragen an den externen Speicher.

Um einen solchen Lese- und Schreibversuch durch die FAT zu erleichtern, können erfindungsgemäß folgende Handlungen vorgenommen werden, wie zum Beispiel das Lesen der FAT von Dateisystem 1.

Es ist festzustellen, dass die Zugriffsanfrage, die auf das Lesen der FAT gerichtet ist, spätestens mit dem ersten, nach dem Mounten vorgenommenen Leserversuch einer Datei erfolgt, oder nach dem ersten, nach dem Mounten vorgenommenen Zugriffsversuch auf das Unterverzeichnis erfolgt.

Da es sich bei der FAT (FAT Allocation Table) um die Tabelle handelt, welche die Bereichsplatzierung der Dateien im Sinne des Dateisystems1 definiert, existieren solche Strukturen in keiner Weise auf dem Dateisystem2 und erst durch die Anwendung von Zugriffsregeln auf die parallelen Strukturen des Dateisystems2 entstehen diese. Im Ergebnis wird FAT auf der Modellierungsvorrichtung 202 vorgehalten. Im Übrigen umschreiben solche Strukturen Metadaten nicht für einzelne, sondern für sämtliche sich auf dem Dateisystem1 befindliche Dateien und stellen eine Art von Zusatzdaten dar, die keine Nutzerdaten sind.

Allerdings erfolgt das Modellieren der FAT 324 nicht kumulativ für alle auf dem Dateisystem2 vorhandenen Dateien, sondern nur für während der Zugriffsanfrage angefragte Dateien 314. Das bedeutet, dass solange eine Datei nicht wenigstens seitens des Endgeräts erkundet wurde (egal ob durch die Anfrage des Verzeichnisinhalts oder durch eine unmittelbare Dateipfadangabe), solange werden für diese Datei keine Metadaten, die ihre Platzierung beschreiben, modelliert. Das Ergebnis einer solchen Modellierung ist die Anwendbarkeit des Verfahrens 404, welches die Zuordenbarkeit von Datei-Nutzerdaten ermöglicht.

In Figur 9 wird ein entsprechendes Verfahren dargestellt, welches darin besteht, Änderungen 405 in der FAT zu qualifizieren und als abstrakte Beschreibung zu definieren, woraus geschlossen werden kann, welche entsprechenden Änderungen auf dem Dateisystem2 vorzunehmen sind.

Zunächst ist festzustellen, dass nach der Zugriffsregel 400 unproblematisch bestimmt werden kann, ob es sich bei dieser Zugriffsanfrage um den Bereich der FAT handelt.

Es wird unterstellt, dass die Aktualisierung der FAT wenigstens darauf gerichtet ist, die Allokationskette für die Datei XXX.ABC abzubilden. Da die Schreibvorgänge auf dem Endgerät in einer optimierten Weise erfolgen, kann nicht erwartet werden, dass die Aktualisierung der FAT sich nur auf eine bestimmte Allokationskette für eine bestimmte Datei richtet. Vielmehr ist zu erwarten, dass Aktualisierungen der FAT für mehrere Dateien kumulativ erfolgen. Welche Änderungen konkret bezweckt sind, ist durch einen Vergleich des Zustands für die FAT zu ermitteln 405.

Vorliegend handelt es sich um einen neuen Eintrag für die Datei XXX.ABC, für welche noch keine Allokationskette existierte. Diese Änderung ist also so zu beschreiben, als wolle das Endgerät für die neue Datei namens XXX.ABC eine ununterbrochene Allokationskette, die 19 Sektoren umfasst, beginnend mit (SCN+1) erstellen.

Im weiteren Schritt ist die gezielte Änderung auf das Dateisystem2 anzuwenden 405, indem diese abstrakte Beschreibung eine Anpassung der Strukturen auf dem Dateisystem2, welche die Platzierung der Nutzerdaten auf dem Dateisystem verwalten, vorzunehmen hat. Das führt auch dazu, dass die Ungewissheit über die Zuordenbarkeit der Nutzerdaten im Sinne des Verfahrens 404 nicht mehr besteht, und diese gemäß der Anfrage 331 zu schreibenden Nutzerdaten, die noch in der Modellierungsvorrichtung vorgehalten wurden, nun in die entsprechende Position des passiven Speichers geschrieben werden können.

Im Ergebnis wird auf dem Dateisystem2 nicht nur ein Eintrag für die Daten XXX.ABC erstellt, wie er bei Bearbeitung der Anfrage 336 erfolgte, sondern auch die Platzierung der Datei XXX.ABC wird konkretisiert, und zwar sowohl auf dem Dateisystem 1 als auch auf dem Dateisystem2.

Schließlich wird über die Kommunikationsschnittstelle 204 über die Erfüllung des Schreibvorgangs berichtet. Die Zugriffsanfrage für FAT ist somit vollendet.

Abschließend ist festzustellen, dass Handlungen eines anderweitig ausgeführten Endgeräts in einer abweichenden Reihenfolge erfolgen können und alle Änderungen auf Dateisystem1 stets unmittelbar in einer Zugriffsanfrage resultieren. Dadurch werden oben angeführte Handlungen der Modellierungsvorrichtung nicht anderes, da die stets sequenzielle Aktualisierung des Dateisystems1 dazu führt, dass der schwebende Zustand im Sinne des Verfahrens 404 ausgeschlossen ist.

### Bezugszeichenliste

1 Emulator 1
2 Emulator 2
M Modellierungsvorrichtung
(100)- (105) siehe detaillierte Beschreibung
(201) Endgerät
(202) Modellierungsvorrichtung
(203) Passiver Speicher
(204) Kommunikationsschnittstelle (201)-(202)
(205) Kommunikationsschnittstelle (202)-(203)
(206) Verfahren zum Vorhalten der Zusatzdaten
(207) Verfahren für die Modellierung von Daten
(301), (310), (311), (312), (313), (315), (325), (351), (355), (356) - siehe detaillierte Beschreibung.
(314) Modellierung der Bootsektorstruktur bzw. Dateisystemparameter
(324) Modellierung der Verzeichnisdaten
(354) Konkretisierung der Nutzerdaten beim Lesen
(331), (332), (333), (335), (336), (349) - siehe detaillierte Beschreibung.
(334) Konkretisierung der Nutzerdaten beim Schreiben
(339) Qualifikation der Metadatenänderungen
(314) Modellierung der Bootsektorstruktur für (Dateisystem 1) anhand des (Dateisystems2)
(Filesystem1) Dateisystem1
(Filesystem2) Dateisystem 2
(BytesPerSector) Sektorgröße in Bytes: Parameter, der den ursprünglichen (IN)-Wert (Value1_2) hat und durch Umwandlung gemäß Zugriffsregel (BS1) möglicherweise einen neuen (OUT)-Wert und ein neues Format (Value1_1) bekommt
Weitere Parameter bzw. Merkmale des Dateisystems:
   (SectorPerCluster) Anzahl der Sektoren pro Cluster
   (ClusterPerVolume)Anzahl der Cluster pro Laufwerk
   (VolumeLabel) Laufwerksbezeichnung
(Etc) - Etc.
(FSPropertyN) Eigenschaft N des Dateisystems: Ein weiterer Parameter auf dem (Dateisystem2), welcher den ursprünglichen (IN)-Wert (ValueN_2) hat und durch Umwandlung gemäß Zugriffsregel (BSN) möglicherweise einen neuen (OUT)-Wert und ein neues Format (ValueN_1) bekommt
(IN) Ausgangswert
(ValueN) Wert N
(Rule) Regel, Zugriffsregel (BS2, BS3 usw.)
(Out) Endwert
(BSMemberN)
(AV) Verfügbar: Verfügbarkeitsvermerk für im (206) vorgehaltene Sektoren. (LEER) bedeutet ,nicht vorgehalten' - (AV) bedeutet 'vorgehalten'
(Last) Letzter: die Position des vorgehaltenen Sektors
(324) Modellierung der Verzeichnisdaten
(StateNow) Ist-Zustand: aktueller Zustand der FAT auf dem Dateisystem 1
(StateNow-1) Vorheriger Zustand der FAT auf dem Dateisystem 1 ggf. unbekannter, noch nicht initialisierter Zustand.
(Directory, Filesystem1) Verzeichnisstruktur auf dem Dateisystem1 (modelliert)
(Directory, Filesystem2) Verzeichnisstruktur auf dem Dateisystem2
(File1... FileN) Datei 1... Datei N: Dateinamen der Dateiobjekte
(Ext1 ... ExtN) Erweiterung 1... Erweiterung N: Dateiobjekterweiterungen
(Size1..SizeN) Größe 1...Größe N: Größe der Dateiobjekte
(Sc1... ScN) Start-Cluster 1 ... Start-Cluster N: der erste Cluster der Datei im Sinne der FAT. Dieser Wert wird für Dateisystem1 gemäß (402) modelliert.
(Nc1 ofN) Nächster Cluster 1 von N: der folgende Cluster 1 auf N
(M+1) die nächste freie Position in FAT auf dem (Dateisystem 1)
(402) Dieses Verfahren modelliert FAT-Strukturen auf Dateisystem1 für vom Dateisystem2 angefragte Dateien. Dadurch ist die Platzierung der Dateien auf Dateisystem1 zunächst nicht fragmentiert.
(402a) Den iterativen Prozess "Inhalte des Stammverzeichnisses von (Dateisystem2) lesen starten
(402b) Feststellen, ob Start-Cluster für den iterierten Inhalt definiert sind.
(402c) Modellierung von (Dateisystem1) über den Bereich mit iteriertem Inhalt
(402d) Den iterativen Prozess "Inhalte des Stammverzeichnisses von (Dateisystem2) lesen beenden
(405) Qualifikation der Änderungen der FAT
(StateNow) Ist-Zustand: Aktueller Zustand der FAT auf dem Dateisystem 1
(StateNow-1) Vorheriger Zustand der FAT auf dem Dateisystem1
(ScN) Start-Cluster N: der erste Cluster der Datei im Sinne der FAT N
(Nc1ofN) Nächster Cluster 1 von N: der folgende Cluster 1 auf N
(LcofN) Letzter Cluster von N: der letzte Cluster auf N
(Free) frei: nicht belegter Sektor
(M+1) die nächste freie Position in FAT auf dem (Dateisystem1)
(Last) letzter Sektor: die Position des vorgehaltenen Sektors
(QualifiedDifferenceFAT) Auswertung, d h. das Ergebnis der Qualifikation dieser Änderungen: Der Unterschied von (StateNow) zu (StateNow-1) kann als neue Kette für "Eine_neue_Datei_erstellen" beschrieben werden; die neue Kette soll bei Cluster (K+M+1) beginnen und 19 Sektoren (L) lang sein.
(406) Qualifikation der Änderungen der Verzeichnistruktur
(StateNow) Ist-Zustand: Aktueller Zustand der Verzeichnisstruktur auf dem Dateisystem 1
(StateNow-1)Ist-Zustand 1: Ursprünglicher Zustand der Verzeichnisstruktur auf dem Dateisystem 1
(File1), (File2), (File3), (FileN) Datei 1, Datei 2 ... Datei N: Dateinamen der Dateiobjekte, entsprechend der Einträge in der Verzeichnisstruktur, von 1 bis N
(Ext1), (Ext2), (Ext3), (ExttN) Erweiterung 1... Erweiterung N: Dateiobjekterweiterungen, entsprechend der Einträge in der Verzeichnisstruktur, von 1 bis N
(Size1),(Size2), (Size3),(SizeN) Größe 1 ... Größe N: Größe der Dateiobjekte, entsprechend der Einträge in der Verzeichnisstruktur, von 1 bis N
(Sc1),(Sc2),(Sc3),(ScN), (Sc N+1) Start-Cluster-Werte der Dateiobjekte, entsprechend der Einträge in der Verzeichnisstruktur, von 1 bis N+1
(QualifiedDifferenceDir) Ergebnis der Qualifikation dieser Änderungen: Der Unterschied von (StateNow) zu (StateNow-1) kann als Neue-Dateierstellen-Vorgang beschrieben werden; die neue Datei trägt den Namen XXX mit der Erweiterung ABC, beginnt bei (SC N+1) und hat die Länge 19*512 Bytes.
(404) Bestimmung der Zugehörigkeit von Nutzerdaten zu den Dateien (ScN) Start-Cluster N: der erste Cluster der Datei im Sinne der FAT N
(Nc1ofN) Nächster Cluster 1 von N: der folgende Cluster 1 auf N
(LcofN) Letzter Cluster von N: der letzte Cluster auf N
(M+1) die nächste freie Position in FAT auf dem (Dateisystem 1)
(Free) frei: nicht belegter Sektor
(Last) letzter Sektor: die Position des vorgehaltenen Sektors
(Range) Bereich: vom Dateisystem belegte Sektoren
(Filesystem1) Dateisystem 1
(OFFSET) Versatz: neben dem Segmentanteil die zweite Komponente (ganzzahliger Wert) in einer Speicheradresse
(Size1) Größe 1: Größe des Dateiobjekts
(File1_fs2) Datei 1 auf Dateisystem 2
(File1_fs2) Datei 1 auf Dateisystem 2
(Ext1), (Ext2), (Ext3), (ExttN) Erweiterung 1... Erweiterung N: Dateiobjekterweiterungen,
(Size1),(Size2), (Size3),(SizeN) Größe 1 ... Größe N: Größe des Dateiobjekts
(File1), (File2), (File3), (FileN) Datei 1... Datei N: Dateinamen der Dateiobjekte

## Patentansprüche

1. Verfahren zum dynamischen Herstellen einer Kompatibilität von Dateisystemen und zum Dateisystem unabhängigen Zugriff auf Daten in Echtzeit, aufweisend:
- ein Gewähren eines Zugriffs (100) auf das Dateisystem eines passiven Datenspeichers für ein aktives Endgerät und eine Modellierungsvorrichtung (M), welche dem passiven Datenspeicher und dem aktiven Endgerät kommunikativ zwischen geschaltet ist;
- ein Entgegennehmen (101) einer Zugriffsanfrage von dem aktiven Endgerät durch die Modellierungsvorrichtung (M), wobei die Zugriffsanfrage Zugriffsdaten und Zugriffsoperationen auf den passiven Datenspeicher spezifiziert;
- ein Erkennen (102) des Dateisystems des passiven Datenträgers durch die Modellierungsvorrichtung (M);
- ein Auswählen (103) von abgespeicherten Zugriffsregeln, welche geeignet sind, die Zugriffsanfrage gemäß dem erkannten (102) Dateisystem des passiven Datenspeichers durchzuführen;
- ein Anwenden (104) der ausgewählten Zugriffsregeln auf Zugriffsdaten durch die Modellierungsvorrichtung (M), welche durch die Zugriffsanfrage spezifiziert werden, wobei die Zugriffsregeln die Zugriffsanfrage so wie diese von dem Dateisystem des aktiven Endgeräts generiert wurden mit dem Dateisystem des passiven Datenspeichers abbilden; und
- ein Durchführen (105) der Zugriffsoperationen gemäß der Zugriffsanfrage.

2. Verfahren nach Anspruch 1, **dadurch gekennzeichnet, dass** das Gewähren des Zugriffs (100) ein Erkennen von Bootsektoren, einen Mount-Vorgang, ein Einbinden des passiven Datenträgers in die Modellierungsvorrichtung (M), ein Einbinden des passiven Datenträgers in das aktive Endgerät, ein kommunikatives Koppeln, ein Herstellen mindestens einer Steckverbindung, ein Aktivieren eines Zugriffs, ein Einrichten von Zugriffsrechten und/ oder eine Datenkommunikation umfasst.

3. Verfahren nach Anspruch 1 oder 2, **dadurch gekennzeichnet, dass** das aktive Endgerät ein Betriebssystem aufweist, welches die Zugriffsanfrage generiert.

4. Verfahren nach Anspruch 3, **dadurch gekennzeichnet, dass** das Anwenden (104) und Durchführen (105) iterativ für jeden Datenstrom durchgeführt wird, wobei das Betriebssystem den Datenstrom definiert.

5. Verfahren nach einem der vorhergehenden Ansprüche, **dadurch gekennzeichnet, dass** die Zugriffsanfrage mindestens eine Lese- und/ oder Schreibanfrage aufweist.

6. Verfahren nach einem der vorhergehenden Ansprüche, **dadurch gekennzeichnet, dass** die Zugriffsanfrage Nutzdaten und/ oder Zusatzdaten spezifiziert.

7. Verfahren nach einem der vorhergehenden Ansprüche, **dadurch gekennzeichnet, dass** Zugriffsdaten Dateinamen, absolute Speicheradressen, relative Speicheradressen, Dateitypen und/ oder Dateieigenschaften beschreiben.

8. Verfahren nach einem der vorhergehenden Ansprüche, **dadurch gekennzeichnet, dass** Zugriffsoperationen Lese- und/ oder Schreiboperationen beschreiben.

9. Verfahren nach einem der vorhergehenden Ansprüche, **dadurch gekennzeichnet, dass** die Zugriffsregeln Modulationsoperationen beschreiben, welche angeben wie Zusatzdaten von Zugriffsdaten zu modellieren sind, damit die Zugriffsdaten gemäß dem Dateisystem zu lesen und/ oder zu schreiben sind.

10. Verfahren nach einem der vorhergehenden Ansprüche, **dadurch gekennzeichnet, dass** Zugriffsregeln beschreiben, wie Daten gemäß einem ersten Dateisystem in ein zweites Dateisystem zu schreiben und/ oder aus einem zweiten Dateisystem zu lesen sind.

11. Verfahren nach einem der vorhergehenden Ansprüche, **dadurch gekennzeichnet, dass** das Erkennen (102) des Dateisystems ein Erkennen von Bootsektoren umfasst.

12. Verfahren nach einem der vorhergehenden Ansprüche, **dadurch gekennzeichnet, dass** das Durchführen (105) der Schreiboperationen gemäß der Zugriffsanfrage bei einer Beschränkung einer Dateigröße durch das Dateisystem eine entsprechende Datei in mindestens zwei Einzeldateien aufteilt.

13. Modellierungsvorrichtung (M), welche einem passiven Datenspeicher und einem aktiven Endgerät kommunikativ zwischenschaltbar ist und eingerichtet zum Gewähren eines Zugriffs (100) auf das Dateisystem eines passiven Datenspeichers für ein aktives Endgerät ist, wobei die Modellierungsvorrichtung (M) ferner zum Entgegennehmen (101) einer Zugriffsanfrage von dem aktiven Endgerät, wobei die Zugriffsanfrage Zugriffsdaten und Zugriffsoperationen auf den passiven Datenspeicher spezifiziert, eingerichtet ist, und ferner eingerichtet ist zum Erkennen (102) des Dateisystems des passiven Datenträgers, und ferner eingerichtet ist zum Auswählen (103) von abgespeicherten Zugriffsregeln, welche geeignet sind, die Zugriffsanfrage gemäß dem erkannten (102) Dateisystem des passiven Datenspeichers durchzuführen, und die Modellierungsvorrichtung (M) ferner eingerichtet ist zum Anwenden (104) der ausgewählten Zugriffsregeln auf Zugriffsdaten, welche durch die Zugriffsanfrage spezifiziert werden, wobei die Zugriffsregeln die Zugriffsanfrage so wie diese von dem Dateisystem des aktiven Endgeräts generiert wurden mit dem Dateisystem des passiven Datenspeichers abbilden; und ferner eingerichtet ist zum Veranlassen eines Durchführens (105) der Zugriffsoperationen gemäß der Zugriffsanfrage.

14. Systemanordnung zur dynamischen Herstellung einer Kompatibilität von Dateisystemen und zum Dateisystem unabhängigen Zugriff auf Daten in Echtzeit, aufweisend:
- mindestens eine Schnittstelleneinheit eingerichtet zum Gewähren eines Zugriffs (100) auf das Dateisystem eines passiven Datenspeichers für ein aktives Endgerät und eine Modellierungsvorrichtung (M), welche dem passiven Datenspeicher und dem aktiven Endgerät kommunikativ zwischen geschaltet ist;
- die Modellierungsvorrichtung (M) eingerichtet zum Entgegennehmen (101) einer Zugriffsanfrage von dem aktiven Endgerät, wobei die Zugriffsanfrage Zugriffsdaten und Zugriffsoperationen auf den passiven Datenspeicher spezifiziert;
- die Modellierungsvorrichtung (M) eingerichtet zum Erkennen (102) des Dateisystems des passiven Datenträgers;
- eine Datenbankeinheit eingerichtet zum Auswählen (103) von abgespeicherten Zugriffsregeln, welche geeignet sind, die Zugriffsanfrage gemäß dem erkannten (102) Dateisystem des passiven Datenspeichers durchzuführen;
- die Modellierungsvorrichtung (M) eingerichtet zum Anwenden (104) der ausgewählten Zugriffsregeln auf Zugriffsdaten, welche durch die Zugriffsanfrage spezifiziert werden, wobei die Zugriffsregeln die Zugriffsanfrage so wie diese von dem Dateisystem des aktiven Endgeräts generiert wurden mit dem Dateisystem des passiven Datenspeichers abbilden; und
- den passiven Datenspeicher eingerichtet zum Durchführen (105) der Zugriffsoperationen gemäß der Zugriffsanfrage.

15. Computerprogrammprodukt mit Steuerbefehlen, welche das Verfahren nach einem der Ansprüche 1 bis 12 ausführen, wenn sie auf einem Computer zur Ausführung gebracht werden.

## Claims

1. A method for dynamically establishing file system compatibility and accessing data in real time independently of the file system, comprising:
- granting access (100) to the file system of a passive data store for an active terminal, and a modeling device (M) communicatively interposed between the passive data store and the active terminal;
- receiving (101) an access request from the active terminal by the modeling device (M), the access request specifying access data and access operations to the passive data store;
- a recognition (102) of the file system of the passive data carrier by the modeling device (M);
- selecting (103) stored access rules suitable to perform the access request according to the recognized (102) file system of the passive data storage;
- applying (104) by the modeling device (M) the selected access rules to access data specified by the access request, the access rules mapping the access request as generated by the file system of the active terminal to the file system of the passive data store; and
- performing (105) the access operations according to the access request.

2. The method according to claim 1, **characterized in that** granting the access (100) comprises recognizing boot sectors, a mount operation, mounting the passive data carrier in the modeling device (M), mounting the passive data carrier in the active terminal, a communicative coupling, establishing at least one plug-in connection, activating an access, establishing access rights and/or data communication.

3. The method according to claim 1 or 2, **characterized in that** the active terminal has an operating system that generates the access request.

4. The method of claim 3, **characterized in that** the applying (104) and performing (105) is performed iteratively for each data stream, wherein the operating system defines the data stream.

5. The method according to one of the preceding claims, **characterized in that** the access request comprises at least one read and/or write request.

6. The method according to one of the preceding claims, **characterized in that** the access request specifies user data and/or additional data.

7. The method according to one of the preceding claims, **characterized in that** access data describe file names, absolute memory addresses, relative memory addresses, file types and/or file properties.

8. The method according to one of the preceding claims, **characterized in that** access operations describe read and/or write operations.

9. The method according to one of the preceding claims, **characterized in that** the access rules describe modulation operations which indicate how to model additional data of access data in order to read and/or write the access data according to the file system.

10. The method according to one of the preceding claims, **characterized in that** access rules describe how data is to be written to a second file system and/or read from a second file system according to a first file system.

11. The method according to any one of the preceding claims, **characterized in that** the detecting (102) of the file system comprises detecting boot sectors.

12. The method according to any one of the preceding claims, **characterized in that** performing (105) the write operations according to the access request when a file size is limited by the file system splits a corresponding file into at least two individual files.

13. A modeling device (M) communicatively interposable between a passive data storage and an active terminal and adapted to grant access (100) to the file system of a passive data storage to an active terminal, wherein the modeling device (M) is further adapted to receive (101) an access request from the active terminal, the access request specifying access data and access operations to the passive data storage, and is further adapted to recognize (102) the file system of the passive data storage, and further adapted to select (103) stored access rules suitable for performing the access request according to the recognized (102) file system of the passive data storage, and the modeling device (M) is further adapted to apply (104) the selected access rules to access data specified by the access request, the access rules mapping the access request as generated by the file system of the active terminal to the file system of the passive data storage; and further adapted to cause the access operations to be performed (105) in accordance with the access request.

14. A system arrangement for dynamically establishing file system compatibility and accessing data in real time independently of the file system, comprising:
- at least one interface unit arranged for granting access (100) to the file system of a passive data memory for an active terminal and a modeling device (M) which is communicatively interconnected between the passive data memory and the active terminal;
- the modeling device (M) is adapted to receive (101) an access request from the active terminal, the access request specifying access data and access operations to the passive data store;
- the modeling device (M) is arranged to recognize (102) the file system of the passive data carrier;
- a database unit adapted to select (103) stored access rules suitable to perform the access request according to the recognized (102) file system of the passive data storage;
- the modeling device (M) is adapted to apply (104) the selected access rules to access data specified by the access request, the access rules mapping the access request as generated by the file system of the active terminal to the file system of the passive data store; and
- the passive data store arranged to perform (105) the access operations in accordance with the access request.

15. A computer program product comprising control instructions that perform the method of any one of claims 1 to 12 when caused to execute on a computer.

## Revendications

1. Procédé pour établir dynamiquement une compatibilité de systèmes de fichiers et pour accéder à des données en temps réel indépendamment du système de fichiers, présentant les étapes consistant à :
- accorder un accès (100) au système de fichiers d'une mémoire de données passive à un terminal actif et présentant un dispositif de modélisation (M) qui est intercalé de manière communicative entre la mémoire de données passive et le terminal actif ;
- recevoir (101) une demande d'accès provenant du terminal actif par le dispositif de modélisation (M), la demande d'accès spécifiant des données d'accès et des opérations d'accès à la mémoire de données passive ;
- reconnaître (102) le système de fichiers du support de données passif par le dispositif de modélisation (M) ;
- sélectionner (103) des règles d'accès mémorisées qui sont appropriées pour exécuter la demande d'accès selon le système de fichiers reconnu (102) de la mémoire de données passive ;
- appliquer (104), par le dispositif de modélisation (M), les règles d'accès sélectionnées à des données d'accès qui sont spécifiées par la demande d'accès, les règles d'accès représentant la demande d'accès telle qu'elle a été générée par le système de fichiers du terminal actif avec le système de fichiers de la mémoire de données passive ; et
- exécuter (105) les opérations d'accès selon la demande d'accès.

2. Procédé selon la revendication 1, **caractérisé en ce que** l'étape consistant à accorder l'accès (100) comprend une reconnaissance de secteurs de boot, une opération de montage, une intégration du support de données passif dans le dispositif de modélisation (M), une intégration du support de données passif dans le terminal actif, un couplage de communication, un établissement d'au moins une connexion enfichable, une activation d'un accès, une définition de droits d'accès et/ou une communication de données.

3. Procédé selon la revendication 1 ou 2, **caractérisé en ce que** le terminal actif présente un système d'exploitation qui génère la demande d'accès.

4. Procédé selon la revendication 3, **caractérisé en ce que** les étapes d'application (104) et d'exécution (105) sont exécutées de manière itérative pour chaque flux de données, le système d'exploitation définissant le flux de données.

5. Procédé selon l'une des revendications précédentes, **caractérisé en ce que** la demande d'accès présente au moins une demande de lecture et/ou d'écriture.

6. Procédé selon l'une des revendications précédentes, **caractérisé en ce que** la demande d'accès spécifie des données utiles et/ou des données supplémentaires.

7. Procédé selon l'une des revendications précédentes, **caractérisé en ce que** les données d'accès décrivent des noms de fichiers, des adresses mémoire absolues, des adresses mémoire relatives, des types de fichiers et/ou des propriétés de fichiers.

8. Procédé selon l'une des revendications précédentes, **caractérisé en ce que** les opérations d'accès décrivent des opérations de lecture et/ou d'écriture.

9. Procédé selon l'une des revendications précédentes, **caractérisé en ce que** les règles d'accès décrivent des opérations de modulation qui indiquent comment des données supplémentaires de données d'accès doivent être modélisées pour que les données d'accès soient lues et/ou écrites selon le système de fichiers.

10. Procédé selon l'une des revendications précédentes, **caractérisé en ce que** les règles d'accès décrivent comment des données selon un premier système de fichiers doivent être écrites dans un deuxième système de fichiers et/ou lues à partir d'un deuxième système de fichiers.

11. Procédé selon l'une des revendications précédentes, **caractérisé en ce que** l'étape consistant à reconnaître (102) le système de fichiers comprend une reconnaissance de secteurs de boot.

12. Procédé selon l'une des revendications précédentes, **caractérisé en ce que** l'étape consistant à exécuter (105) les opérations d'écriture selon la demande d'accès divise un fichier en au moins deux fichiers individuels en cas de limitation d'une taille de fichier par le système de fichiers.

13. Dispositif de modélisation (M) qui peut être intercalé de manière communicative entre une mémoire de données passive et un terminal actif et qui est conçu pour accorder un accès (100) au système de fichiers d'une mémoire de données passive à un terminal actif, dans lequel le dispositif de modélisation (M) est en outre conçu pour recevoir (101) une demande d'accès du terminal actif, la demande d'accès spécifiant des données d'accès et des opérations d'accès à la mémoire de données passive, et est en outre conçu pour reconnaître (102) le système de fichiers du support de données passif, et est en outre conçu pour sélectionner (103) des règles d'accès mémorisées, qui sont appropriées pour exécuter la demande d'accès selon le système de fichiers reconnu (102) de la mémoire de données passive, et le dispositif de modélisation (M) est en outre conçu pour appliquer les règles d'accès à des données d'accès qui sont spécifiées par la demande d'accès, les règles d'accès représentant la demande d'accès telle qu'elle a été générée par le système de fichiers du terminal actif avec le système de fichiers de la mémoire de données passive ; et est en outre conçu pour initier l'exécution (105) des opérations d'accès selon la demande d'accès.

14. Agencement de système pour établir dynamiquement une compatibilité de systèmes de fichiers et pour accéder à des données en temps réel indépendamment du système de fichiers, présentant :
- au moins une unité d'interface conçue pour accorder un accès (100) au système de fichiers d'une mémoire de données passive à un terminal actif et un dispositif de modélisation (M) qui est intercalé de manière communicative entre la mémoire de données passive et le terminal actif ;
- le dispositif de modélisation (M) conçu pour recevoir (101) une demande d'accès du terminal actif, la demande d'accès spécifiant des données d'accès et des opérations d'accès à la mémoire de données passive ;
- le dispositif de modélisation (M) conçu pour reconnaître (102) le système de fichiers du support de données passif ;
- une unité de base de données conçue pour sélectionner (103) des règles d'accès mémorisées qui sont appropriées pour exécuter la demande d'accès selon le système de fichiers reconnu (102) de la mémoire de données passive,
- le dispositif de modélisation (M) conçu pour appliquer les règles d'accès sélectionnées à des données d'accès qui sont spécifiées par la demande d'accès, les règles d'accès représentant la demande d'accès telle qu'elle a été générée par le système de fichiers du terminal actif avec le système de fichiers de la mémoire de données passive ; et
- la mémoire de données passive conçue pour exécuter (105) les opérations d'accès selon la demande d'accès.

15. Produit programme d'ordinateur comprenant des instructions de commande qui, lorsqu'elles sont exécutées sur un ordinateur, mettent en oeuvre le procédé selon l'une des revendications 1 à 12.
